# EUROPÄISCHE PATENTSCHRIFT

(11) **EP 3 419 848 B1**
(45) Veröffentlichungstag und Bekanntmachung des Hinweises auf die Patenterteilung: **01.04.2020**
(21) Anmeldenummer: 17706244.5
(22) Anmeldetag: 21.02.2017
(51) Int. Cl.: B60K 6/48, B60K 6/30, B60K 6/387, B60K 6/547, B60W 10/02, B60W 10/06, B60W 10/08, B60W 20/40, F16F 15/14

(54) **ANTRIEBSSYSTEM FÜR EIN HYBRIDFAHRZEUG UND VERFAHREN ZUM BETREIBEN EINES SOLCHEN**
DRIVE SYSTEM FOR A HYBRID VEHICLE AND METHOD FOR OPERATING SAID SYSTEM
SYSTÈME DE PROPULSION POUR VÉHICULE HYBRIDE ET PROCÉDÉ POUR FAIRE FONCTIONNER UN TEL SYSTÈME DE PROPULSION

(30) Priorität: 24.02.2016 DE 102016202828
(43) Veröffentlichungstag der Anmeldung: 02.01.2019
(73) Patentinhaber: Bayerische Motoren Werke Aktiengesellschaft, 80809 München (DE)
(72) Erfinder: HOESS, Bernhard, 80995 Muenchen (DE); JUNG, Thomas, 80999 München (DE); KOBLER, Sebastian, 80801 München (DE)
(86) Internationale Anmeldenummer: PCT/EP2017/053824
(87) Internationale Veröffentlichungsnummer: WO 2017/144425

(56) Entgegenhaltungen:
- WO-A2-2015/172784
- DE-A1- 3 022 373
- DE-A1-102004 023 673
- DE-A1-102009 024 530
- DE-A1-102015 113 125
- WITTMER C ET AL: "OPTIMIERTE FAHRSTRATEGIEN EINES HYBRIDFAHRZEUGS MIT SCHWERER SCHWUNG-MASSE-DER TAKTBETRIEB ALS BEISPIEL", AUTOMATISIERUNGSTECHNIK - AT, OLDENBOURG WISSENSCHAFTSVERLAG, MUNCHEN, DE, Bd. 44, Nr. 7, 1. Juli 1996 (1996-07-01), Seiten 331-337, XP000592693, ISSN: 0178-2312

## Beschreibung

Die Erfindung betrifft ein Antriebssystem für ein Hybridfahrzeug sowie ein Verfahren zum Betreiben eines solchen Antriebssystems.

Um Hybridfahrzeuge energieeffizient zu betreiben, sind aus dem Stand der Technik bereits Antriebssysteme bekannt, die bei unbetätigtem Fahrpedal, also wenn keine aktive Fahrzeugbeschleunigung durch den Fahrer des Hybridfahrzeugs angefordert ist, den Kraftschluss (drehmomentleitende Verbindung zwischen dem Antriebsmotor und den antreibbaren Rädern) im Antriebsstrang bei befeuertem Verbrennungsmotor (Antriebsmotor) aufheben, um in einen Betriebszustand des sogenannten "Leerlaufsegelns" zu gelangen. Außerdem ist es bereits bekannt, den Verbrennungsmotor bei unbetätigtem Fahrpedal, mit welchem ein Beschleunigungswunsch für das Hybridfahrzeug durch den Fahrer vorgebbar ist, und vorhandenem Kraftschluss im Antriebsstrang auszuschalten, sodass sich ein mechanischer Schleppbetrieb des Verbrennungsmotors mit optionaler Bremsrekuperation einstellt.

Die DE 29 43 554 A1 offenbart einen Hybridantrieb für ein Fahrzeug, mit einem Verbrennungsmotor als erster Antriebsquelle, einer Elektromaschine als weiterer Antriebsquelle, einem Fahrzeuggetriebe zum Bereitstellen unterschiedlicher Übersetzungsstufen (Gänge) sowie zwei Trennkupplungen, wobei der Verbrennungsmotor während der Fahrt in geeigneten Betriebsphasen über das Öffnen und Schließen der Trennkupplungen periodisch ab- und wieder angekuppelt und zusätzlich abgestellt werden kann, wobei der Verbrennungsmotor ohne Schwungrad ausgebildet ist. Die erforderliche Schwungmasse ist der Elektromaschine zugeordnet, diese Schwungmasse ist insbesondere, wenigstens teilweise, in den rotierenden Teil der Elektromaschine integriert. Durch die schwungradlose Ausbildung des Verbrennungsmotors bleibt dieser nahezu unverzögert stehen, wenn die Trennkupplung zwischen dem Verbrennungsmotor und der Elektromaschine außer Eingriff gebracht wird und kann danach durch Wiederankuppeln an die rotierende Elektromaschine aufgrund seiner geringen Masse wieder, im Wesentlichen ruckfrei, angeworfen werden.

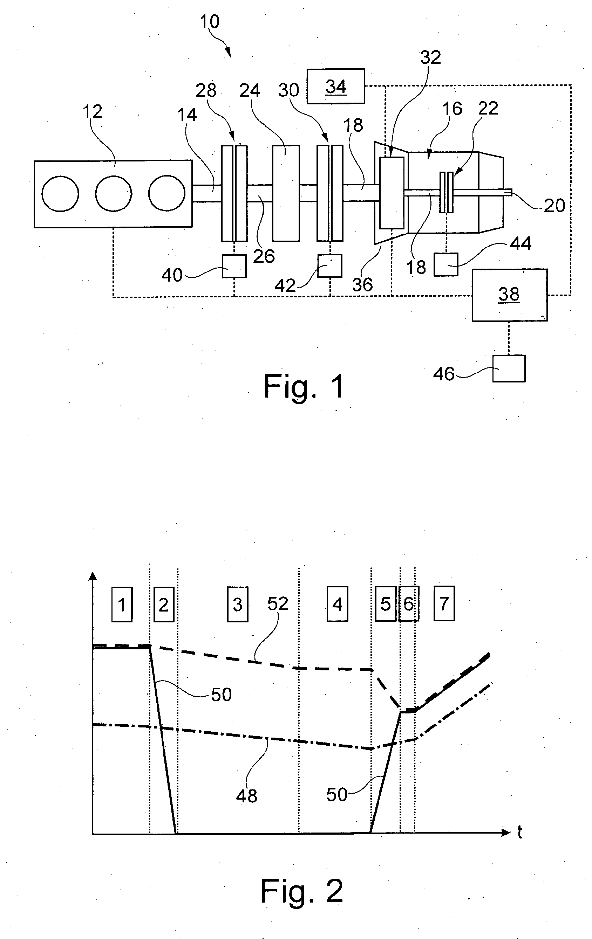

Die DE 10 2009 024530 A1 befasst sich mit einem Antriebsstrang für ein Hybridfahrzeug. Die DE 10 2015 113125 A1 befasst sich mit einem Verfahren und einem System zum Starten einer Brennkraftmaschine. Die DE 10 2004 023673 A1 befasst sich mit einem Verfahren zur Steuerung des Antriebsstranges eines Hybridfahrzeugs. Die WO 2015/172784 A2 befasst sich mit einer Drehmomentübertragungsvorrichtung für ein Hybridfahrzeug. Die DE 30 22 373 A1 befasst sich mit einem Personenkraftwagen mit einer Brennkraftmaschine und einem Schwungrad. Weiter bildet Wittmer C. et al: "Optimierte Fahrstrategie eines Hybridfahrzeugs mit schwerer Schwung-Masse-der Taktbetrieb als Beispiel", Automatisierungstechnik - AT, Oldenbourg Wissenschaftsverlag, München, DE, Bd. 44, Nr. 7, 1. Juli 1996 (1996-07-01), Seiten 331-337, XP000592693, ISSN: 0178-2312, Abb. 1 allgemein relevanten Stand der Technk.

Ausgehend vom bekannten Stand der Technik hat sich für einen Fahrbetrieb des Hybridfahrzeugs mit abgestelltem Verbrennungsmotor gezeigt, dass es bei einem Beschleunigungswunsch des Fahrers, welcher das Starten des Verbrennungsmotors erfordert, etwas dauert, bis der Verbrennungsmotor gestartet ist und das Fahrzeug tatsächlich beschleunigt. Ein solches Verhalten des Antriebssystems kann sich nachteilig auf den Fahrkomfort auswirken und kann daher vom Fahrer als störend empfunden werden.

Weiter haben Untersuchungen gezeigt, dass im Falle des Wiederankuppelns des Verbrennungsmotors an die Elektromaschine, die mit dem Abtrieb, d.h. mit den antreibbaren Rädern des Hybridfahrzeugs, verbunden ist, Kompressionsstöße des Verbrennungsmotors beim Hochlaufen des Verbrennungsmotors auf den restlichen Antriebsstrang durchgeleitet werden können und so kann es zu Antriebsstrangschwingungen kommen, dies kann ebenfalls vom Fahrer als störend empfunden werden.

Es ist eine Aufgabe der Erfindung, ein Antriebssystem für ein Hybridfahrzeug sowie ein Verfahren zu dessen Betrieb bereitzustellen, das auch bei zunächst abgestelltem Verbrennungsmotor auf einen Beschleunigungswunsch des Fahrers hin eine besonders rasche Fahrzeugreaktion ermöglicht.

Diese Aufgabe wird erfindungsgemäß durch ein Antriebssystem gemäß dem ersten Patentanspruch sowie durch ein Verfahren zum Betrieb eines solchen Antriebssystems gemäß Patentanspruch 12 gelöst.

Das Antriebssystem ist für ein Hybridfahrzeug vorgesehen und weist vorzugsweise einen Verbrennungsmotor, der eine Verbrennungsmotorwelle aufweist und antreiben kann, ein schaltbares Fahrzeuggetriebe, das antriebsseitig eine, vorzugsweise eine koaxial zur Verbrennungsmotorwelle angeordnete, Getriebe-Eingangswelle und abtriebsseitig eine, vorzugsweise koaxial zur Verbrennungsmotorwelle angeordnete, Getriebe-Ausgangswelle aufweist. Weiter vorzugsweise weist das Antriebssystem eine Getriebekupplung zum Koppeln oder Entkoppeln der Getriebe-Eingangswelle und der Getriebe-Ausgangswelle miteinander auf.

Vorzugsweise ist diese Getriebekupplung als eine schlupffähige und schlupfsteuerbare Kupplung ausgebildet. Unter einer schlupffähigen Kupplung ist insbesondere eine Kupplung zu verstehen, mit welcher, wenigstens in ausgewählten Betriebsphasen, ein Schlupf zwischen den mit dieser Kupplung zu koppelnden Elementen ermöglicht ist und vorzugsweise ist dieser Schlupf steuerbar. Dabei ist im Sinne der Erfindung unter dem Koppeln oder Entkoppeln das Herstellen oder Aufheben einer drehmomentleitenden Verbindung durch die Kupplung zu verstehen. Aus dem Stand der Technik sind verschiedene Bauformen solcher Kupplungen bekannt, insbesondere reibschlüssige Kupplungen, hydrodynamische Kupplungen oder reib-/formschlüssige Kupplungen. In diesem Sinn ist unter einer reib-/formschlüssigen Kupplung eine Kupplung zu verstehen, bei welcher beim Schließen der Kupplung zunächst eine reibschlüssige Verbindung hergestellt wird und bei vollständig geschlossener Kupplung besteht eine formschlüssige Verbindung zum Übertragen des Drehmoments, ein solches Prinzip ist beispielsweise von Konussynchronisierungen aus dem Automobilbau bekannt.

Insbesondere zum Starten des Verbrennungsmotors weist das Antriebssystem eine Schwungmassen-Antriebseinheit auf, welche in axialer Richtung zwischen dem Verbrennungsmotor und dem Fahrzeuggetriebe angeordnet ist und weiter vorzugsweise weit die Schwungmassen-Antriebseinheit eine, vorzugsweise koaxial zur Verbrennungsmotorwelle angeordnete, Zwischenwelle auf.

Die Schwungmassen-Antriebseinheit weist eine Drehschwingungsreduzierungs-Einrichtung mit einer antriebsseitigen DU-Eingangswelle und einer abtriebsseitigen DU-Ausgangswelle auf, wobei die Drehschwingungsreduzierungs-Einrichtung zum Verringern von Drehschwingungen insbesondere der Zwischenwelle eingerichtet ist. Die Drehschwingungsreduzierungs-Einrichtung ist, bezogen auf die Übertragung der Antriebsleistung vom Verbrennungsmotor zu den antreibbaren Rädern, vorzugsweise vollständig, zwischen der ersten Kupplung und der zweiten Kupplung angeordnet.

Somit ist die Drehschwingungsreduzierungs-Einrichtung als wirksame Schwungmasse der Schwungmassen-Antriebseinheit und damit des gesamten Antriebssystems nutzbar. Aus dem Stand der Technik bekannte Schwungmassen-Antriebseinheiten weisen, bedingt durch ihr Wirkprinzip, häufig hohe Massenträgheitsmomente auf. Aus den genannten Gründen ist die, vorzugsweise vollständige, Anordnung der Drehschwingungsreduzierungs-Einrichtung zwischen der ersten Kupplung und der zweiten Kupplung vorteilhaft, da so vorzugsweise nahezu oder bevorzugt überhaupt keine weitere oder besonders bevorzugt nur eine geringe weitere zusätzliche Schwungmasse als sogenannte wirksame Schwungmasse der Schwungmassen-Antriebseinheit installiert ist. Insbesondere würde eine weitere zusätzliche Schwungmasse im Antriebsstrang die Dynamik dieses Antriebsstrangs beeinträchtigen, da diese, insbesondere in Beschleunigungsphasen des Hybridfahrzeugs, mit beschleunigt werden müsste, zudem kann eine solche zusätzliche Schwungmasse insbesondere auch zu einer geringeren Effizienz des Antriebssystems führen. Insbesondere mittels der vorgeschlagenen vollständigen Anordnung der Drehschwingungsreduzierungs-Einrichtung zwischen der ersten Kupplung und der zweiten Kupplung ist ein Antriebssystem erreichbar, welches ein verbessertes dynamisches Verhalten aufweist.

Vorzugsweise umfasst die Drehschwingungsreduzierungs-Einrichtung eine dem Verbrennungsmotor zugewandte Primärseite und eine dem Getriebe zugewandte Sekundärseite.

In einer bevorzugten Ausführungsform ist die Drehschwingungsreduzierungs-Einrichtung als drehzahladaptiver (Dreh-)Schwingungstilger ausgebildet und weist zum Bereitstellen eines drehzahlabhängigen Tilgerverhaltens (Drehzahladaption) vorzugsweise ein Fliehkraftpendel auf oder besteht bevorzugt aus einem solchen.

In einer weiteren bevorzugten Ausführungsform ist die Drehschwingungsreduzierungs-Einrichtung als semiaktiver oder aktiver Tilger/Schwingungstilger ausgebildet. Insbesondere ist unter einer solchen Einrichtung eine Drehschwingungsreduzierungs-Einrichtung zu verstehen, welche ein aktives oder semiaktives Element aufweist, mit welchem ein Übertragungsverhalten dieser Drehschwingungsreduzierungs-Einrichtung beeinflussbar beziehungsweise steuerbar ist und wobei dieses aktive oder semiaktive Element vorzugsweise durch einen externen Steuerbefehl ansteuerbar ist. Derartige semiaktive oder aktive Tilger sind aus dem Stand der Technik bekannt. Vorzugsweise weist ein semiaktiver oder aktiver Tilger eine elektrische, bevorzugt eine pneumatische und besonders bevorzugt eine hydraulische Einrichtung auf, mit welcher das Übertragungsverhalten dieser Drehschwingungsreduzierungs-Einrichtung aktiv oder semiaktiv beeinflussbar ist.

Bezügliche der Einteilung aktiv/passiv sind wenigstens drei Arten von Schwingungstilgern aus dem Stand der Technik bekannt und als Drehschwingungsreduzierungs-Einrichtung für das vorgeschlagene Antriebssystem prinzipiell verwendbar:
- (gewöhnliche) passive Tilger, insbesondere ein Zweimassenschwungrad,
- aktiv gesteuerte Tilger, insbesondere hydraulische Systeme, bei welchen die benötigte Energie für die Schwingungstilgung von extern zugeführt wird,
- semiaktive Tilger, bei welchen die im Bedarfsfall benötigte Energie insbesondere in einem elastischen Element gespeichert ist (Blockierung und Auslösung erst oberhalb eines bestimmten Schwellwertes).

Das Antriebssystem weist insbesondere eine erste Kupplung zum Koppeln oder Entkoppeln der Verbrennungsmotorwelle und der Zwischenwelle, eine zweite Kupplung zum Koppeln oder Entkoppeln der Zwischenwelle und der Getriebe-Eingangswelle sowie eine Elektromaschine, die vorzugsweise auf der Getriebe-Eingangswelle sitzt oder vorzugsweise drehstarr, insbesondere zur Leistungsübertragung, mit dieser gekoppelt oder selektiv mit dieser koppelbar ist, auf. Insbesondere bei einer solchen Anordnung ist die Getriebe-Eingangswelle durch die Elektromaschine in einem Motorbetrieb der Elektromaschine unmittelbar und damit besonders energieeffizient antreibbar. Eine Eingangsseite der ersten Kupplung (antriebsseitiger Teil dieser Kupplung) ist vorzugsweise direkt, vorzugsweise drehfest beziehungsweise drehstarr, mit der Verbrennungsmotorwelle verbunden.

Insbesondere diese Konstruktion des Antriebssystems erlaubt auch bei abgestelltem Verbrennungsmotor eine sehr rasche Fahrzeugreaktion im Falle einer vom Fahrer gewünschten Fahrzeugbeschleunigung (vorgebbar über die Fahrpedalstellung), für welche der Verbrennungsmotor aus dem unbefeuerten in den befeuerten Betrieb überführt und zum Antrieb des Hybridfahrzeugs herangezogen wird. Auch bei einer Betätigung des Fahrpedals zur aktiven Beschleunigung des Fahrzeugs lässt sich die Elektromaschine sofort in den Motorbetrieb schalten und mit dem Automatikgetriebe koppeln, so ist es insbesondere ohne Verbrennungsmotor ermöglicht, das Fahrzeug im Rahmen der Leistungsfähigkeit der Elektromaschine zu beschleunigen (Zero-Emission Betrieb). Gleichzeitig lässt sich über die Schwungmassen-Antriebseinheit ein mechanischer Start (Impulsstart) des abgeschalteten Verbrennungsmotors realisieren. Im Sinne der Erfindung ist unter dem Impulsstart des Verbrennungsmotors zu verstehen, dass die Verbrennungsmotorwelle mit der Schwungmassen-Antriebseinheit zur Leistungsübertragung, insbesondere drehstarr oder vorzugsweise drehfest, verbunden wird und so von der rotierenden Schwungmassen-Antriebseinheit Leistung (Drehzahl, Drehmoment) auf die Verbrennungsmotorwelle übertragen wird, so dass die Verbrennungsmotorwelle auf eine Startdrehzahl beschleunigt wird, ab welcher der Verbrennungsmotor in den befeuerten Betrieb versetzt werden kann (Verbrennungsmotor-Startdrehzahl).

Vorzugsweise ist die erste Kupplung zum Zustarten des Verbrennungsmotors mittels Schwungmassen-Antriebseinheit ausgebildet, beziehungsweise wird diese für den Zustart des Verbrennungsmotors geschlossen. Vorzugsweise ist die erste Kupplung derart ausgebildet, dass diese, vorzugsweise nur, zwischen den Zuständen Auf/Zu geschaltet wird. Vorzugsweise ist die erste Kupplung als reibschlüssige Kupplung, bevorzugt als formschlüssige und besonders bevorzugt als reib-/formschlüssige Kupplung ausgebildet. Weiter vorzugsweise ist die erste Kupplung als sogenannte "normally open" Kupplung (in unbetätigtem Zustand der Kupplung ist kein Drehmoment übertragbar) ausgebildet und bevorzugt als sogenannte "normally closed" Kupplung (in unbetätigtem Zustand der Kupplung ist von dieser ein Drehmoment übertragbar). Insbesondere mittels einer "normally closed" Kupplung ist ein besonders effizientes Antriebssystem darstellbar, da für das Aufrechterhalten der drehmomentleitenden Verbindung in dieser Kupplung keine Verluste anfallen.

Vorzugsweise ist die zweite Kupplung zum Übertragen von Antriebsleistung von der Schwungmassen-Antriebseinheit auf die Getriebe-Eingangswelle ausgebildet. Vorzugsweise ist die zweite Kupplung, insbesondere um einen besseren Fahrkomfort zu ermöglichen, als insbesondere schlupfregelbare Kupplung ausgebildet. Insbesondere eine schlupfsteuerbare Kupplung ermöglicht eine Regelung des Schlupfes beim Einrücken (Überführen vom geöffneten in den geschlossenen Zustand) der Kupplung. Vorzugsweise ist die zweite Kupplung als eine Anfahrkupplung, welche vorzugsweise als Ein- oder Mehrscheibenreibkupplung ausgebildet ist oder bevorzugt als ein hydrodynamischer Drehmomentwandler mit oder ohne Überbrückungskupplung, ausgebildet. Vorzugsweise ist die zweite Kupplung als reibschlüssige Kupplung, bevorzugt als reib-/formschlüssige Kupplung ausgebildet. Weiter vorzugsweise ist die zweite Kupplung als sogenannte "normally open" Kupplung ausgebildet und bevorzugt als sogenannte "normally closed" Kupplung. Insbesondere mittels einer "normally closed" Kupplung ist ein besonders effizientes Antriebssystem darstellbar, da für das Aufrechterhalten der drehmomentleitenden Verbindung in dieser Kupplung keine Verluste anfallen.

Die Zeitspanne, bis der Verbrennungsmotor zugestartet ist und zur Beschleunigung des Hybridfahrzeugs herangezogen werden kann, wird gemäß dem vorgeschlagenen Verfahren zur Steuerung des Antriebssystems von der Elektromaschine überbrückt, so dass in einer solchen Phase eine elektrische Fahrzeugbeschleunigung vorliegt. Das Antriebssystem reagiert damit weniger träge - da eine Fahrzeugbeschleunigung nicht erst nach dem Starten des Verbrennungsmotors ausgeführt wird - und vermittelt dem Fahrer so eine als angenehm empfundene rasche Fahrzeugreaktion.

In einer bevorzugten Ausführungsform weist die Schwungmassen-Antriebseinheit eine Drehschwingungsreduzierungs-Einrichtung mit einer antriebsseitigen DU-Eingangswelle und einer abtriebsseitigen DU-Ausgangswelle auf. Im Sinne der Erfindung ist unter einer Drehschwingungsreduzierungs-Einrichtung eine Einrichtung zum Reduzieren von Drehschwingungen, welche insbesondere vom Verbrennungsmotor auf die Verbrennungsmotorwelle und damit auf das Antriebssystem als solches aufbringbar sind, zu verstehen. Vorzugsweise ist die Drehschwingungsreduzierungs-Einrichtung als Drehschwingungsdämpfer oder Drehschwingungstilger oder als eine Kombination aus diesen beiden Einrichtungen ausgebildet. Derartige Drehschwingungsreduzierungs-Einrichtungen sind in unterschiedlichen Bauformen aus dem Stand der Technik bekannt. Vorzugsweise ist die Drehschwingungsreduzierungs-Einrichtung aus einer Gruppe von Einrichtungen ausgewählt, welche folgende Einrichtungen umfasst:
- Ein-, Zwei- oder Mehrmassenschwungrad,
- Drehschwingungstilger, vorzugsweise drehzahladaptiver Tilger, weiter vorzugsweise Drehschwingungstilger mit Fliehkraftpendel,
- Aktiver Drehschwingungstilger/-dämpfer, vorzugsweise mit steuerbarem Hydraulik- oder Elektroelementen zur Drehschwingungsreduzierung,
- Semiaktiver Drehschwingungstilger/-dämpfer
- oder eine Kombination aus wenigstens zwei der zuvor genannten Einrichtungen.

Insbesondere ist die Drehschwingungsreduzierungs-Einrichtung derart angeordnet, dass mit dieser Drehschwingungen der Zwischenwelle verringerbar sind. Vorzugsweise ist wenigstens die DU-Eingangswelle oder die DU-Ausgangswelle mit der Zwischenwelle drehfest, vorzugsweise drehstarr verbunden. Weiter vorzugsweise ist wenigstens eine dieser Wellen (DU-Eingangswelle / DU-Ausgangswelle) als diese Zwischenwelle ausgebildet. Vorzugsweise ist die Drehschwingungsreduzierungs-Einrichtung, bezogen auf die Übertragung der Antriebsleistung vom Verbrennungsmotor zu den antreibbaren Rädern des Hybridfahrzeugs, vollständig zwischen der ersten Kupplung und der zweiten Kupplung angeordnet. Insbesondere mittels dieser Anordnung konzentriert sich die gesamte rotierende Masse der Drehschwingungsreduzierungs-Einrichtung auf die Zwischenwelle und so ist ein besonders guter Start des Verbrennungsmotors ermöglicht, da die Massenträgheit des Verbrennungsmotors gegenüber herkömmlichen Systemen verringert ist und die Massenträgheit der Schwungmassen-Antriebseinheit erhöht ist.

Bei aus dem Stand der Technik bekannten System ist häufig wenigstens ein Teil oder die gesamte Drehschwingungsreduzierungs-Einrichtung, beispielsweise eine Primärseite eines Zweimassenschwungrads, dauerhaft mit der Verbrennungsmotorenwelle gekoppelt. Eine solche herkömmliche Anordnung führt also dazu, dass dieser Drehmassen Teil der Drehschwingungsredzierungs-Einrichtung (Primärseite des Zweimassenschwungrads) beim Starten des Verbrennungsmotors aus dem Stillstand beschleunigt werden muss und so den Startvorgang verlängert (höhere Massenträgheit). Weiter ist bei bekannten Systemen die in der originär vorhandenen Schwungmasse (beispielsweise Sekundärseite des Zweimassenschwungrads), welche zum Starten des Verbrennungsmotors herangezogen wird, abspeicherbare kinetische Energie relativ gering, weil der mit dem Verbrennungsmotor gekoppelte Teil (Primärseite des Zweimassenschwungrads) nicht mit dieser Schwungmasse mit rotiert. Um bei herkömmlichen Systemen eine für den Verbrennungsmotorstart ausreichende Drehmasse der Schwungmasse, welche zum Starten des Verbrennungsmotors herangezogen wird, zu erreichen, wird die Schwungmasse durch zusätzliche Gewichte vergrößert und eine Vergrößerung der Schwungmasse führt insgesamt zu einem trägeren Antriebssystem.

In einer bevorzugt Ausführungsform des Antriebssystems ist die Drehschwingungsreduzierungs-Einrichtung derart ausgebildet, dass die DU-Eingangswelle zur Reduzierung der Drehschwingungen gegenüber der DU-Ausgangsseite verdrehbar ist. Weiter vorzugsweise sind die DU-Eingangswelle und die DU-Ausgangswelle konzentrisch zueinander angeordnet. Vorzugsweise ist wenigstens eine dieser Wellen (DU-Eingangswelle / DU-Ausgangswelle) konzentrisch zur Verbrennungsmotorwelle angeordnet oder bevorzugt sind beide konzentrisch zu dieser angeordnet. Insbesondere mittels einer solchen Ausgestaltung ist ein besonders einfacher Aufbau des Antriebssystems ermöglicht.

In einer bevorzugt Ausführungsform ist eine Ausgangsseite der ersten Kupplung mit der Zwischenwelle oder der bevorzugt mit der DU-Eingangswelle dauerhaft drehfest verbunden. Weiter vorzugsweise ist eine Eingangsseite der zweiten Kupplung mit der Zwischenwelle oder bevorzugt mit der DU-Ausgangswelle dauerhaft drehfest verbunden. Vorzugsweise weist die Schwungmassen-Antriebseinheit die Ausgangsseite der ersten Kupplung, die Drehschwingungsreduzierungs-Einrichtung, die Zwischenwelle, die Eingangsseite der zweiten Kupplung und eine Schwungmasse auf, vorzugsweise besteht die Schwungmassen-Antriebseinheit aus diesen Elementen. Vorzugsweise besteht die Schwungmassen-Antriebseinheit aus der Ausgangsseite der ersten Kupplung, der Drehschwingungsreduzierungs-Einrichtung, der Zwischenwelle und der Eingangsseite der zweiten Kupplung. Insbesondere mittels einer solchen Anordnung ist ein platzsparender Aufbau realisierbar. Insbesondere durch eine vollständige Integration der Drehschwingungsreduzierungs-Einrichtung in die Schwungmassen-Antriebseinheit ist der überwiegende Teil der, für das Starten des Verbrennungsmotor mittels der Schwungmassen-Antriebseinheit erforderlichen Energie, bereits mittels der Drehmasse der Drehschwingungsreduzierungs-Einrichtung realisierbar und es muss daher keine oder nur eine geringe zusätzliche Schwungmasse vorgesehen werden.

Gemäß einer Ausführungsform des Antriebssystems ist die Elektromaschine eine Niedervolt-Elektromaschine mit einer Betriebsspannung, insbesondere einer Nennbetriebsspannung, von weniger als 60 V, vorzugsweise ist die Elektromaschine kurzzeitig bei höheren Spannungslagen betreibbar, sogenannte Peakleistung / Peakspannung. Durch die Ausbildung als Niedervolt-Elektromaschine ist ein technisch, insbesondere gegenüber einem Hochvolt-Antrieb mit Spannungslagen von zum Teil mehreren hundert Volt, einfacher zu beherrschendes Niedervolt-Antriebssystem darstellbar. Dies liegt insbesondere daran, dass aufgrund der niedrigeren elektrischen Spannung im System das Gefährdungsrisiko geringer und die Absicherung des elektrischen Bordnetzes somit einfacher und kostengünstiger bereitzustellen ist.

Vorzugsweise ist die verwendete Elektromaschine eine 48-V-Elektromaschine, da diese im Vergleich zu einer herkömmlichen 12-V-Elektromaschine sowohl im Generatorbetrieb bei der Rekuperation als auch im Motorbetrieb eine höhere Leistung bereitstellen kann. Insbesondere bei der Verwendung der Elektromaschine zum Beschleunigen des Hybridfahrzeugs macht sich eine höhere Leistung (realisierbar über eine 48 Volt Elektromaschine gegenüber einer 12 Volt Elektromaschine) positiv bemerkbar, da die damit erreichbare schnellere Fahrzeugreaktion für den Fahrer wahrnehmbar ist.

Vorzugsweise ist die Elektromaschine, vorzugsweise wenigstens teilweise oder bevorzugt vollständig, in das Fahrzeuggetriebe, welches vorzugsweise als ein Automatikgetriebe, bevorzugt als manuell schaltbares Fahrzeuggetriebe oder besonders bevorzugt als automatisiert schaltbares Fahrzeuggetriebe ausgeführt ist, integriert. Vorzugsweise weist die Elektromaschine einen Stator und einen, gegenüber diesem Stator drehbaren Rotor auf. Vorzugsweise ist der Stator drehfest mit einem Getriebegehäuse des Fahrzeuggetriebes verbunden.

Vorzugsweise weist das Fahrzeuggetriebe antriebsseitig eine Kupplungsglocke auf, wobei die Elektromaschine, wenigstens aber der Stator dieser, in der Kupplungsglocke aufgenommen ist. Vorzugsweise ersetzt oder ergänzt dabei die Elektromaschine den, üblicherweise in der Kupplungsglocke bei Automatikgetrieben in Planetengetriebebauweise vorgesehenen, Drehmomentwandler, so dass sich eine kompakt ausgeführte Elektromaschine ohne zusätzlichen Bauraumbedarf in das Fahrzeuggetriebe integrieren lässt. Dies führt zu einer besonders kompakten Konstruktion des Antriebssystems.

In einer weiteren Ausführungsform des Antriebssystems ist ein elektrisches Bordnetz vorgesehen, wobei die Elektromaschine auch als Generator betreibbar ist, vorzugsweise ist die Elektromaschine als elektromechanischer Energiewandler ausgebildet, welcher vorzugsweise wenigstens generatorisch und motorisch betreibbar ist und besonders bevorzugt ist diese Elektromaschine im sogenannten Mehr-Quadrantenbetriebe und ganz besonders bevorzugt im Vier-Quadrantenbetrieb betreibbar. Insbesondere im Generatorbetrieb ist elektrische Leistung von der Elektromaschine in das elektrische Bordnetz einspeicherbar. Auf diese Weise lässt sich die Elektromaschine zur Rekuperation nutzen, bei welcher kinetische Energie des Hybridfahrzeugs in elektrische Energie, welche vorzugsweise in einem elektrochemischen Energiespeicher, vorzugsweise einem Akkumulator, abspeicherbar ist, umgesetzt wird.

Die eingangs genannte Aufgabe wird auch gelöst durch ein Verfahren gemäß Patentanspruch 12. Dieses Verfahren ist zum Betreiben des oben beschriebenen Antriebssystems vorgesehen und ist in Form computerausführbarer Anweisungen auf einem Steuergerät abspeicherbar und vorzugsweise ist ein Steuergerät für ein Kraftfahrzeug vorgesehen, auf welchem dieses Verfahren in Form computerausführbarer Anweisungen gespeichert ist. Weiter weist dieses Verfahren folgende Schritte auf:
a) in einem Betriebszustand des Antriebssystems wird die erste Kupplung geöffnet oder in einem geöffneten Zustand gehalten und der Verbrennungsmotor wird abgeschaltet beziehungsweise befindet sich bereits in einem abgeschalteten Zustand;
c) über die geschlossene zweite Kupplung wird die Schwungmassen-Antriebseinheit mittels der Elektromaschine mindestens auf eine Schwungmassen-Startdrehzahl beschleunigt oder auf dieser Schwungmassen-Startdrehzahl oder darüber gehalten,
d) der elektrischen Steuereinheit wird ein Signal zur aktiven Fahrzeugbeschleunigung übermittelt, wodurch ein Zustart des Verbrennungsmotors erforderlich wird;
e) daraufhin wird die zweite Kupplung durch die elektrische Steuereinheit geöffnet;
f) anschließend oder zeitgleich überschneidend mit der zweiten Kupplung wird die erste Kupplung geschlossen, so dass über den Drehimpulsausgleich zwischen Schwungmassen-Antriebseinheit und Verbrennungsmotorwelle der Verbrennungsmotor auf eine Verbrennungsmotor-Startdrehzahl beschleunigt wird;
g) der Verbrennungsmotor wird, ausgehend von der Verbrennungsmotor-Startdrehzahl, in einem befeuerten Betrieb betrieben und auf eine Verbrennungsmotor-Zieldrehzahl hochbeschleunigt.

Insbesondere nach dem Erreichen der Verbrennungsmotor-Zieldrehzahl kann der Verbrennungsmotor zur Fahrzeugbeschleunigung herangezogen werden. Vorzugsweise wird in einem weiteren bevorzugten Verfahrensschritt nach dem Erreichen der Verbrennungsmotor-Startdrehzahl, insbesondere nach Erreichen der Verbrennungsmotor-Zieldrehzahl, die zweite Kupplung geschlossen. Weiter vorzugsweise ist auch die Getriebekupplung wenigstens teilweise oder vorzugsweise vollständig geschlossen oder wird geschlossen, so dass ein Kraftschluss zwischen dem Verbrennungsmotor und den antreibbaren Rädern des Hybridfahrzeugs hergestellt ist und somit ist Leistung (Drehzahl/Drehmoment) vom Verbrennungsmotor auf die antreibbaren Räder oder umgekehrt übertragbar.

Im Sinne der Erfindung ist unter der Verbrennungsmotor-Zieldrehzahl eine Drehzahl der Verbrennungsmotorwelle zu verstehen, die sich aus den Fahrbedingungen des Hybridfahrzeugs ergibt, insbesondere aus der Drehzahl, die sich aus der Fahrgeschwindigkeit des Hybridfahrzeugs und dem eingelegten Gang (Übersetzungsverhältnis) im Fahrzeuggetriebe ergibt. Insbesondere ist die Verbrennungsmotor-Zieldrehzahl eine vom Steuergerät vorgegebene Drehzahl der Verbrennungsmotorwelle.

Besonders bevorzugt wird zusätzlich ein Verfahrensschritt b) ausgeführt, vorzugsweise wird dieser Verfahrensschritt b) zwischen zwei der oben als unmittelbar aufeinander folgenden Schritte ausgeführt und bevorzugt wird der Verfahrensschritt b) zwischen den Verfahrensschritten a) und c) ausgeführt. Im Verfahrensschritt b) wird die Elektromaschine bei geschlossener Getriebekupplung betrieben, vorzugsweise bei vollständig geschlossener Getriebekupplung oder bevorzugt bei teilweise geschlossener Getriebekupplung, wobei die Getriebekupplung im teilweise geschlossenen Zustand im Schlupf betrieben wird. Die Getriebekupplung befindet sich dabei im Kraftfluss zur Leistungsübertragung von der Getriebe-Eingangswelle über weitere Antriebsstrangelemente auf die antreibbaren Räder des Hybridfahrzeugs. Insbesondere durch diese Steuerung der Getriebekupplung im Kraftschluss mit den antreibbaren Rädern ist es ermöglicht, ein positives oder negatives Drehmoment an die antreibbaren Räder des Hybridfahrzeugs zu stellen. Insbesondere durch diese Steuerung des Antriebssystems lässt sich das Hybridfahrzeug rein elektrisch fahren, also insbesondere bei abgekoppeltem Verbrennungsmotor antreiben. Bei höheren Lastanforderungen, wie diese, insbesondere bei einer Beschleunigung des Hybridfahrzeugs auftreten können und welche nicht mehr von der Elektromaschine allein abgedeckt werden können, wird der Verbrennungsmotor über die Verfahrensschritte c) und folgende (ff), vorzugsweise c) bis e), insbesondere schnell und auch komfortabel zugestartet und in das Antriebssystem eingekoppelt. Durch das vorgeschlagene Verfahren ist somit für den Fahrer ein insbesondere unspürbarer Zustart des Verbrennungsmotors ermöglicht.

Bevorzugt wird bei abgeschaltetem Verbrennungsmotor und bei Fahrzeugstillstand oder Kriechgeschwindigkeit, also bei Betrieb des Hybridfahrzeugs mit geringer Geschwindigkeit, insbesondere bei Geschwindigkeiten von weniger als 50 km/h, vorzugsweise weniger als 25 km/h und bevorzugt von weniger als 10 km/h und besonders bevorzugt weniger als 5 km/h wird die Getriebekupplung vor Schritt b) in schlupfenden Betrieb (Getriebekupplung teilweise geschlossen) gebracht, so dass sich die Elektromaschine im Kraftschluss (Drehmomentübertragung) mit den antreibbaren Rädern des Hybridfahrzeugs befindet, um so vorzugsweise ein positives oder negatives Moment an die antreibbaren Räder des Hybridfahrzeugs zu stellen. Vorzugsweise ist zeitgleich die zweite Kupplung geschlossen oder wird bevorzugt geschlossen, so dass die Elektromaschine und die Schwungmassen-Antriebseinheit drehfest miteinander verbunden sind. Die Elektromaschine wird in einem solchen Fall vorzugsweise auf Schwungmassen-Startdrehzahl oder darüber betrieben, wobei die Schwungmassen-Startdrehzahl, insbesondere in einem solchen Fall, höher ist, als die sich aus der aktuellen Fahrzeuggeschwindigkeit über die Raddrehzahl der antreibbaren Räder ergebende Drehzahl der Elektromaschine im Falle einer vollständig geschlossenen Getriebekupplung.

Der oben genannte Vorgang/Ablauf ist insbesondere ähnlich dem Betrieb eines aus dem Stand der Technik bekannten herkömmlichen Antriebsstrangs eines Fahrzeugs mit verbrennungsmotorischem Antrieb im Niedriggeschwindigkeitsbereich, bei dem die Drehzahl der Verbrennungsmotorwelle, welche gleich oder oberhalb der Leerlaufdrehzahl des Verbrennungsmotors liegen muss, noch über der sich aus der Raddrehzahl der antreibbaren Räder ergebenden Drehzahl der Getriebe-Eingangswelle, welche mit der Fahrgeschwindigkeit des Fahrzeugs korreliert, liegt.

Insbesondere mittels des beschriebenen Verfahrens ergibt sich der Vorteil, dass die Schwungmassen-Antriebseinheit auch in diesem Niedriggeschwindigkeitsbereich (Kriechgeschwindigkeit) drehzahlmäßig so konditioniert werden kann, dass ein Zustartvorgang des Verbrennungsmotors gemäß den Verfahrensschritten c) bis e) ausführbar ist, der Verbrennungsmotor kann mit Hilfe der Schwungmassen-Antriebseinheit vorteilhaft gestartet werden, wenn dieser eine ausreichende Drehzahl zum Überführen vom unbefeuerten in den befeuerten Betrieb, sogenannte Verbrennungsmotor-Startdrehzahl, aufweist. Die Verbrennungsmotor-Startdrehzahl ist eine, insbesondere von der Bauart des Verbrennungsmotors abhängige Größe, welche vorgebbar ist.

Vorzugsweise liegt die Schwungmassen-Startdrehzahl in einem Bereich, der größer ist als 500 Umdrehungen/Minute (U/min), vorzugsweise größer ist als 750 U/min , bevorzugt größer oder gleich 1000 U/min ist und weiter ist dieser Bereich kleiner als 2000 U/min, vorzugsweise kleiner als 1600 U/min und bevorzugt ist dieser Beriech kleiner oder gleich 1400 U/min.

Vorzugsweise wird die Schwungmassen-Startdrehzahl bereits nach einem Initialisieren des Fahrzeugs, insbesondere nach einer Erkennung eines bevorstehenden Startvorgangs, im Fahrzeugstillstand über die Elektromaschine eingestellt.

Vorzugsweise beim Anfahren des Hybridfahrzeugs aus dem Fahrzeugstillstand, kann es, insbesondere aus energetischer Sicht, vorteilhaft sein, die Schwungmassen-Startdrehzahl mit der Elektromaschine zeitgleich zum Bereitstelle eines positiven Antriebsdrehmoments der Elektromaschine zum Antreiben des Hybridfahrzeugs, vorzugsweise beim ersten Bereitstellen eines positiven Antriebsdrehmomentes der Elektromaschine an die antreibbaren Räder des Hybridfahrzeugs, einzustellen.

Insbesondere durch dieses Verfahren wird im Falle einer gewünschten, aktiven Fahrzeugbeschleunigung bei abgelegtem, das heißt unbefeuertem und entkoppeltem Verbrennungsmotor, eine schnelle Reaktion des Antriebsstrangs auf diesen Beschleunigungswunsch ermöglicht. Zum einen wird der Beschleunigungswunsch unmittelbar durch die Elektromaschine bedient (positives Antriebsmoment wird bereitgestellt) und zeitgleich wird der Verbrennungsmotor (mittels der Schwungmassen-Antriebseinheit) gestartet, so dass nach kurzer Zeit der Verbrennungsmotor zusätzlich zur Beschleunigung des Hybridfahrzeugs herangezogen werden kann.

Es lassen sich insbesondere wenigstens fünf Betriebsmodi für das Antriebssystem angeben, welche vorzugsweise zusätzlich oder bevorzugt alternativ zu dem zuvor geschilderten Betriebsverfahren ausführbar sind insbesondere sind diese in Kombination mit dem zuvor genannten Betriebsverfahren ausführbar. Diese fünf Betriebsmodi sind:
Model: Initialstart des Verbrennungsmotors
Mode2: Betrieb im Niedriggeschwindigkeitsbereich im elektrischen Kriechbetrieb
Mode3: Ablegen des Verbrennungsmotors
Mode4: Start beziehungsweise Wiederstart des Verbrennungsmotors (abgelegter Zustand des Verbrennungsmotors) im Fahrzeugstillstand oder während der Fahrt
Mode5: Fahrbetriebe bei abgelegtem Verbrennungsmotor, also Motor-Aus-Segeln, Motor-Aus-Rekuperation, Motor-Aus-E-Fahren mit Drehmomentbereitstellung durch die Elektromaschine
   Nachfolgend sind diese Betriebsmodi näher erläutert.

### Mode1, Initialstart

Dieser Betriebszustand ist insbesondere dadurch gekennzeichnet, dass der Verbrennungsmotor abgestellt ist (kein befeuerter Betrieb, Verbrennungsmotorwelle steht still) und in der Schwungmassen-Antriebseinheit ist zunächst keine kinetische Energie gespeichert, die Zwischenwelle steht also still.

Im Mode1 ist das Antriebssystem mit einem Verfahren steuerbar, welches die Schritte aufweist:
- Getriebekupplung öffnen oder in einem geöffneten Zustand halten,
- zweite Kupplung schließen oder in einem geschlossenen Zustand halten,
- erste Kupplung öffnen oder in einem geöffneter Zustand halten,
- Mittels der Elektromaschine die Drehschwingungsreduzierungs-Einrichtung auf die für den Start des Verbrennungsmotors erforderliche Drehzahl beschleunigen (Schwungmassen-Startdrehzahl),
- Nach Erreichen Schwungmassen-Startdrehzahl Schließen der ersten Kupplung,
- Verbrennungsmotor in den befeuerten Betrieb versetzen.

Der Verbrennungsmotor wird bei diesem Startvorgang, insbesondere mittels eines Summenstartmoments, welches sich aus der rotierenden Schwungmasse-Antriebseinheit und vorzugsweise dem Drehmoment der Elektromaschine stammt, gestartet. Dieser sogenannte Initialstart des Verbrennungsmotors wird vorzugsweise durch das Betätigen eines Startschalters oder bevorzugt eines Zündschlosses initiiert.

Mit einem solchen Startverfahren nach Mode1 ist auch ein vorteilhaftes Kaltstarten des Verbrennungsmotors mit hohem Losbrechmoment ohne zusätzliche Startvorrichtung (bspw. Ritzelstarter) darstellbar.

In einer bevorzugten Ausführungsform der Erfindung wird das Hochdrehen der Schwungmassen-Antriebseinheit und damit der Drehschwingungsreduzierungs-Einrichtung, bis vollständig oder teilweise zur Schwungmassen-Startdrehzahl dem Betätigen einer Startvorrichtung, insbesondere eines sogenannten Zündschlosses oder eines Startschalters, vorgelagert. Insbesondere durch dieses chronologische Vorverlagern (Prädiktion des Startvorgangs) des Hochdrehens der Schwungmassen-Antriebseinheit gegenüber dem eigentlichen Startvorgang des Verbrennungsmotors kann der Initialstart des Verbrennungsmotors besonders schnell ablaufen. Vorzugsweise wird das Hochdrehen der Schwungmassen-Antriebseinheit über eine Näherungserkennung, sogenannter Funkschlüssel oder bevorzugt ein Erkennen einer Türöffnung des Fahrzeugs oder besonders bevorzugt über eine Sitzbelegungserkennung initiiert. Anschaulich gesprochen wird das Fahrzeug in Startbereitschaft versetzt (Hochdrehen der Schwungmassen-Antriebseinheit mittels der Elektromaschine) sobald ein Fahrzeugführer auf einem Fahrersitz im Hybridfahrzeug Platz genommen hat oder wenn eine Tür, insbesondere die Fahrertür, des Hybridfahrzeugs geöffnet wird.

### Mode2, Betrieb im Niedriggeschwindigkeitsbereichs (elektrischer Kriechbetrieb)

Dieser Betriebsmodus ist insbesondere dadurch gekennzeichnet, dass der Verbrennungsmotor abgestellt ist und das Hybridfahrzeug mit einer Geschwindigkeit aus einem Niedriggeschwindigkeitsbereich unter Bereitstellung von Antriebsleistung von der Elektromaschine bewegt wird. Im Sinne der Erfindung ist unter einem Niedriggeschwindigkeitsbereich ein Geschwindigkeitsbereich zu verstehen, bei dem die Geschwindigkeit kleiner ist als 75 km/h, vorzugsweise kleiner ist als 50 km/h und besonders bevorzugt kleiner ist als 15 km/h.

Im Mode2 ist das Antriebssystem mit einem Verfahren steuerbar, welches die Schritte aufweist:
- erste Kupplung öffnen oder in einem geöffneten Zustand halten,
- zweite Kupplung schließen oder in einem geschlossenen Zustand halten, so dass die Schwungmassen-Antriebseinheit und die Elektromaschine drehfest miteinander verbunden sind,
- die Elektromaschine stellt zum Anfahren aus dem Stillstand des Hybridfahrzeugs Antriebsleistung über die geschlossene zweite Kupplung an der Getriebe-Eingangswelle zur Verfügung.

In einer bevorzugten Ausführungsform des Mode2 weist das Verfahren die Schritte auf:
- teilweises Öffnen der Getriebekupplung, so dass ein Schlupf zwischen der Getriebe-Eingangswelle und Getriebeausgangswelle ermöglicht ist,
- erhöhen der Drehzahl der Elektromaschine und damit der Drehzahl der Schwungmassen-Antriebseinheit auf die Schwungmassen-Startdrehzahl während einer Übergangsphase, wobei in diesem Sinn unter einer Übergangsphase eine Zeitspanne zur verstehen ist, die geringer ist als 5 Sekunden, vorzugsweise geringer ist als 2 Sekunden und bevorzugt ist die Übergangsphase höchsten 1 Sekunde oder geringer.

Insbesondere durch den Schlupf in der Getriebekupplung ist es ermöglicht, eine Differenzdrehzahl zwischen der Drehzahl der Getriebe-Eingangswelle und der Drehzahl der Getriebeausgangswelle, unter Berücksichtigung eines Übersetzungsverhältnisses zwischen der Getriebe-Eingangs- und Getriebe-Ausgangswelle (aktuell eingelegter Gang des Fahrzeuggetriebes), in der Getriebekupplung abzubauen. Dieser sogenannte Abbau der Drehzahldifferenz ergibt sich daraus, dass die Getriebe-Ausgangswelle über ein festes Übersetzungsverhältnis mit wenigstens einem antreibbaren Rad des Hybridfahrzeugs gekoppelt ist und diese in der Regel zur Fahrzeuggeschwindigkeit proportionale Drehzahl mit dem Übersetzungsverhältnis des eingelegten Gangs auf die Getriebe-Eingangswelle übertragen wird. Mit der schlupfsteuerbaren Getriebekupplung ist es ermöglicht, die Getriebe-Eingangswelle und damit die Schwungmassen-Antriebseinheit, nahezu unabhängig von der Getriebe-Ausgangswelle zu betreiben.

Sollte innerhalb der Übergangsphase die Startaufforderung zum Zustarten des Verbrennungsmotors kommen, insbesondere durch eine Beschleunigungsanforderung / Fahrpedalstellung, so ist es ermöglicht, einen sogenannten Kombistart aus der Schwungmassen-Antriebseinheit und der Elektromaschine auszuführen, in welchem aus diesen beiden (Elektromaschine, Schwungmassen-Antriebseinheit) der Verbrennungsmotorenwelle Leistung zum Beschleunigen dieser auf die Verbrennungsmotor-Startdrehzahl zugeführt wird. Für einen derartigen Kombistart wird vorzugsweise die Getriebekupplung teilweise oder vollständig geöffnet.

### Mode3, Ablegen des Verbrennungsmotors

Dieser Betriebsmodus ist insbesondere dadurch gekennzeichnet, dass der Verbrennungsmotor aus dem befeuerten Betrieb in den Stillstand versetzt wird, also abgestellt wird.

Im Mode3 ist das Antriebssystem mit einem Verfahren steuerbar, welches die Schritte aufweist:
- Öffnen oder Offenhalten der ersten Kupplung und vorzugsweise gleichzeitiges Abstellen des Verbrennungsmotors, insbesondere durch das Stoppen einer Brennstoff-Einspritzung in Brennräume des Verbrennungsmotors,
- insbesondere dadurch, dass die Drehschwingungsreduzierungs-Einrichtung vollständig zwischen der ersten und der zweiten Kupplung angeordnet ist und somit nach dem Öffnen der ersten Kupplung nicht mehr mit der Verbrennungsmotorwelle gekoppelt ist, ist das Trägheitsmoments (Drehmasse) gegenüber aus dem Stand der Technik bekannten Verbrennungsmotoren vermindert und die Verbrennungsmotorwelle steht bereits nach kurzer Zeit nach dem Abstellen des Verbrennungsmotors still, wodurch der Komfort des Hybridfahrzeugs erhöht ist.

### Mode4, Start des Verbrennungsmotors (aus dem Stand bzw. aus dem elektrischen Fahren)

Dieser Betriebsmodus (Mode4) ist insbesondere dadurch gekennzeichnet, dass der Verbrennungsmotor abgestellt ist und das Hybridfahrzeug mittels der Elektromaschine angetrieben wird oder sich das Fahrzeug zunächst im Stillstand befindet.

Im Mode4 ist das Antriebssystem mit einem Verfahren steuerbar, welches für diesen elektrischen Fahrbetrieb die Schritte aufweist:
- die erste Kupplung wird geöffnet oder in einem geöffneten Zustand gehalten,
- die zweite Kupplung wird geschlossen oder in einem geschlossenen Zustand gehalten, so dass die Schwungmassen-Antriebseinheit und die Elektromaschine drehfest miteinander verbunden sind,
- die Getriebekupplung wird geschlossen oder in einem geschlossenen Zustand gehalten, insbesondere bei niedrigen Geschwindigkeiten des Fahrzeugs, also insbesondere Geschwindigkeiten aus dem Niedriggeschwindigkeitsbereich, wird die Getriebekupplung in einem teilweise geschlossenen Zustand mit Schlupf betrieben, so dass durch die Elektromaschine ein Drehmoment für den Antrieb des Hybridfahrzeugs bereitstellbar ist und gleichzeitig die Schwungmassen-Antriebseinheit antreibbar ist,
- bei einer Startaufforderung an den Verbrennungsmotor, insbesondere weil der Verbrennungsmotor die Elektromaschine im generatorischen Betrieb zur Versorgung des Fahrzeugbordnetzes antreibt oder weil eine angeforderte Beschleunigung nicht allein mit der Elektromaschine erreichbar ist, wird zuerst die Schwungmassen-Antriebseinheit von der Getriebe-Eingangswelle durch Öffnen der zweiten Kupplung entkoppelt und so kann die Elektromaschine ihre gesamte Leistung zum Antrieb an die Getriebe-Eingangswelle abgeben,
- vorzugsweise gleichzeitig oder bevorzugt verzögert zu dem vorhergehenden Schritt wird so dann die erste Kupplung geschlossen, so dass die Verbrennungsmotorwelle von der Schwungmassen-Antriebseinheit auf die Verbrennungsmotor-Startdrehzahl beschleunigt und der Verbrennungsmotor in den befeuerten Betrieb überführt wird.

Vorzugsweise beschleunigt der Verbrennungsmotor bei geöffneter erster Kupplung, bis die Drehzahl der Verbrennungsmotorwelle der Drehzahl der Schwungmassen-Antriebseinheit entspricht. Insbesondere durch dieses Verfahren ist eine komfortable Umschaltung bei der Beschleunigung auf den Verbrennungsmotor ermöglicht.

Weiter vorzugsweise wird nach dem Erreichen der gleichen Drehzahl zwischen der Verbrennungsmotorwelle und der Schwungmassen-Antriebseinheit und damit der Getriebe-Eingangswelle die zweite Kupplung geschlossen, dies geschieht insbesondere währenddessen die Drehzahlregelung am Verbrennungsmotor aktiv ist.

Vorzugsweise ist nach dem Schließen der zweiten Kupplung durch den Verbrennungsmotor ein Antriebsdrehmoment von der Verbrennungsmotorwelle an die Getriebe-Eingangswelle abgebbar und so ist das Hybridfahrzeug mittels des Verbrennungsmotors weiter beschleunigbar.

### Mode 5, Motor-Aus-Rekuperation / -Segeln / -E-fahren

Dieser Betriebsmodus (Mode5) ist insbesondere dadurch gekennzeichnet, dass der Verbrennungsmotor abgestellt ist, sich das Hybridfahrzeug bewegt und die Elektromaschine im Generatorbetrieb betrieben wird (Rekuperation), unbestromt mit rotiert (-Segeln) oder zum Antreiben des Hybridfahrzeugs herangezogen wird (-E-fahren).

Im Mode5 ist das Antriebssystem mit einem Verfahren steuerbar, welches für die Energierückgewinnung (Rekuperation) die Schritte aufweist:
- Getriebekupplung wird wenigstens teilweise oder vorzugsweise vollständig geschlossen oder in einem geschlossenen Zustand gehalten
- die erste Kupplung wird geöffnet oder in einen geöffneten Zustand gehalten,
- die zweite Kupplung wird geschlossen oder in einem geschlossenen Zustand gehalten,
- die Schwungmassen-Antriebseinheit rotiert aufgrund dieser Kopplung (zweite Kupplung geschlossen) mit der Drehzahl der Getriebe-Eingangswelle,
- in einem Fahrzustand des Hybridfahrzeugs, in welchem aktiv weder beschleunigt noch gebremst wird (Betätigung weder einer Fahrzeugbremse noch eines Fahrpedals, umgangssprachlich Gaspedal oder Geschwindigkeitsregeleinrichtung), wird die Elektromaschine derart angesteuert, dass diese auf die Getriebe-Eingangswelle ein Drehmoment ausübt, welches der aktuellen Drehrichtung der Getriebe-Eingangswelle entgegenwirkt (negative Drehmoment), so dass mit der Elektromaschine eine elektrische Leistung (Spannung, Strom) abgebbar ist, welche in ein Fahrzeugbordnetz abgebbar ist.

Insbesondere durch einen Betrieb des Hybridfahrzeugs im Betriebsmodus Mode5 ist auf besonders einfache Weise eine Energierückgewinnung ermöglicht.

Nachfolgend sind einzelne Zusammenhänge der Steuerung des Antriebssystems und dessen Funktionsweise näher erläutert.

Die Schwungmassen-Antriebseinheit ist in einem Betriebszustand des Antriebssystems von der Elektromaschine entkoppelt (zweite Kupplung offen) und mit dem Verbrennungsmotor gekoppelt (erste Kupplung geschlossen), um einen mechanischen Impulsstart des Verbrennungsmotors durchzuführen. Während der Verbrennungsmotor in diesem Betriebszustand gestartet wird, ist die Elektromaschine bereits mit dem Fahrzeuggetriebe, insbesondere mit der Getriebe-Ausgangswelle des Fahrzeuggetriebes, gekoppelt (Getriebekupplung wenigstens teilweise oder vollständig geschlossen) und kann so das Hybridfahrzeug beschleunigen. Der Beschleunigungswunsch des Fahrers lässt sich somit in vorteilhafter Weise bereits vor dem Zustarten des Verbrennungsmotors und vor der Kopplung der Verbrennungsmotorwelle, insbesondere über die erste, zweite Kupplung, Getriebekupplung und die Getriebe-Eingangswelle, mit der Getriebe-Ausgangswelle über die Elektromaschine realisieren.

Vorzugsweise wird der Verbrennungsmotor nach dem Schließen der ersten Kupplung im zuvor erläuterten Schritt d) ff durch die Schwungmassen-Antriebseinheit gestartet. Die Schwungmassen-Antriebseinheit bildet einen Energiespeicher und ist insbesondere so ausgeführt, dass der Verbrennungsmotor über die rotierende Schwungmasse der Schwungmassen-Antriebseinheit startbar ist. Im Fahrbetrieb des Hybridfahrzeugs wird die Schwungmasse der Schwungmassen-Antriebseinheit, vorzugsweise stetig, über einer notwendigen Mindestdrehzahl, insbesondere der Schwungmassen-Startdrehzahl, zum Starten des Verbrennungsmotors gehalten, weiter vorzugsweise ist wenigstens zweitweise eine Anhebung der Drehzahl der Schwungmassen-Antriebseinheit über diese Mindestdrehzahl ermöglicht, diese Anhebung ist vorzugsweise durch das Antreiben der Schwungmassen-Antriebseinheit mit der Elektromaschine erreichbar.

Vorzugsweise ist diese Mindestdrehzahl im Sinne der Erfindung bezogen auf die Energiemenge, welche zum Anwerfen des Verbrennungsmotors notwendig ist, bestimmt. Insbesondere entspricht diese Energiemenge der Energie, welche notwendig ist, um den Verbrennungsmotor aus dem Stillstand bis auf seine Startdrehzahl (Verbrennungsmotor-Startdrehzahl) zu beschleunigen. Vorzugsweise ist eine, wenigstens zweitweise, deutliche Anhebung der Drehzahl der Schwungmassen-Antriebseinheit über diese Mindestdrehzahl vorgesehen. Unter einer deutlichen Anhebung ist in diesem Sinne vorzugsweise eine Anhebung der Drehzahl der Schwungmassen-Antriebseinheit auf das 1,5-fache der Mindestdrehzahl oder mehr, bevorzugt auf das 2-fache oder mehr und besonders bevorzugt auf das 5-fache oder mehr zu verstehen. Insbesondere mittels einer Anhebung der Drehzahl der Schwungmassen Antriebseinheit ist einerseits ein sicherer Start des Verbrennungsmotors ermöglicht und andererseits kann Energie aus der Schwungmassen-Antriebseinheit zum Beschleunigen des Hybridfahrzeugs eingesetzt werden.

Vorzugsweise ist die Getriebe-Ausgangswelle nach dem Schließen, vorzugsweise dem wenigstens teilweisen oder bevorzugt vollständigen Schließen, der Getriebekupplung, insbesondere im Schritt d) oder vorzugsweise d) ff, durch die Elektromaschine antreibbar und vorzugsweise wird diese im Schritt d) oder vorzugsweise d) ff, wenigstens zeitweise, durch die Elektromaschine angetrieben. Auf diese Weise lässt sich, insbesondere nach einem erfassten Beschleunigungswunsch des Fahrers, mit geringem Aufwand eine entsprechende Fahrzeugreaktion, das heißt eine Fahrzeugbeschleunigung mit dem Verbrennungsmotor, erzeugen, wobei diese Fahrzeugbeschleunigung als Reaktion auf den Beschleunigungswunsch des Fahrers besonders zeitnah erfolgt.

Gemäß einer bevorzugt Ausführungsform des Verfahrens wird nach einem Start des Verbrennungsmotors die zweite Kupplung in einem nachfolgenden Verfahrensschritt wieder geschlossen. Insbesondere durch das Schließen der zweiten Kupplung wird der zu diesem Zeitpunkt zugestartete Verbrennungsmotor mit dem Fahrzeuggetriebe, insbesondere der Getriebe-Eingangswelle des Fahrzeuggetriebes, drehfest verbunden und kann das Hybridfahrzeug in gewünschter Weise beschleunigen.

Gemäß einer bevorzugt Ausführungsform des Verfahrens wird die Getriebekupplung vor Schritt b) geschlossen und die Elektromaschine in einen Generatorbetrieb geschaltet. Insbesondere dadurch nimmt das Fahrzeug einen besonders energiesparenden Betriebszustand ein, der auch als "Motor-aus-Segeln mit Rekuperation" (Mode5) bezeichnet wird. In diesem Betriebszustand wird das rollende Hybridfahrzeug bei abgelegtem Verbrennungsmotor (kein befeuerter Betrieb, Verbrennungsmotorwelle im Stillstand) lediglich durch unvermeidbare Reibungseffekte sowie den im Generatorbetrieb auftretenden, einstellbaren Widerstand der Elektromaschine gebremst.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 eine schematische Skizze eines erfindungsgemäßen Antriebssystems für ein Hybridfahrzeug;
- Figur 2 ein Diagramm, bei dem die Fahrzeuggeschwindigkeit sowie die Drehzahlen des Verbrennungsmotors und der Schwungmassen-Antriebseinheit über der Zeit aufgetragen sind,
- Figur 3 ein weiteres Diagramm, bei dem die Fahrzeuggeschwindigkeit sowie die Drehzahlen des Verbrennungsmotors und der Schwungmassen-Antriebseinheit über der Zeit aufgetragen sind,
- Figur 4 ein weites Diagramm, bei dem die Fahrzeuggeschwindigkeit sowie die Drehzahlen des Verbrennungsmotors und der Schwungmassen-Antriebseinheit über der Zeit aufgetragen sind,
- Figur 5 ein weiteres Diagramm, bei dem die Fahrzeuggeschwindigkeit sowie die Drehzahlen des Verbrennungsmotors und der Schwungmassen-Antriebseinheit über der Zeit aufgetragen sind,
- Figur 6 eine weitere schematische Skizze eines erfindungsgemäßen Antriebssystems für ein Hybridfahrzeug;

Die Figur 1 zeigt ein Antriebssystem 10 für ein Hybridfahrzeug, mit einem Verbrennungsmotor 12, der eine Verbrennungsmotorwelle 14 aufweist und antreiben kann, einem Automatikgetriebe 16, das antriebsseitig eine koaxial zur Verbrennungsmotorwelle 14 angeordnete Getriebe-Eingangswelle 18 und abtriebsseitig eine koaxial zur Verbrennungsmotorwelle 14 angeordnete Getriebe-Ausgangswelle 20 aufweist, sowie einer Getriebekupplung 22 zum Koppeln oder Entkoppeln der Getriebe-Eingangswelle 18 und der Getriebe-Ausgangswelle 20. Ferner umfasst das Antriebssystem 10 eine Schwungmassen-Antriebseinheit 24, die axial zwischen dem Verbrennungsmotor 12 und dem Automatikgetriebe 16 angeordnet ist und auf einer koaxial zur Verbrennungsmotorwelle 14 angeordneten Zwischenwelle 26 sitzt, eine erste Kupplung 28 zum Koppeln oder Entkoppeln der Verbrennungsmotorwelle 14 und der Zwischenwelle 26, eine zweite Kupplung 30 zum Koppeln oder Entkoppeln der Zwischenwelle 26 und der Getriebe-Eingangswelle 18 sowie eine Elektromaschine 32, die auf der Getriebe-Eingangswelle 18 sitzt und diese in einem Motorbetrieb der Elektromaschine 32 antreiben kann.

Die Schwungmassen-Antriebseinheit 24 ist gemäß Figur 1 beispielhaft als Zweimassenschwungrad ausgeführt, wobei das Schwungrad einen Energiespeicher bildet. Unabhängig von der konkreten Konstruktion der Schwungmassen-Antriebseinheit 24 ermöglicht deren Schwungmasse zusammen mit der ersten Kupplung 28 einen mechanischen Impulsstart des abgelegten Verbrennungsmotors 12 bei stehendem oder rollendem Fahrzeug. Folglich kann auf eine elektrische Startvorrichtung für den Verbrennungsmotor 12 verzichtet werden.

Gemäß Figur 1 ist ferner ein elektrisches Bordnetz 34 vorgesehen, wobei die Elektromaschine 32 auch als Generator ausgebildet ist und in einem Generatorbetrieb elektrische Energie in das elektrische Bordnetz 34 einspeist.

Im vorliegenden Ausführungsbeispiel ist ausschließlich ein Niedervolt-Bordnetz 34 mit weniger als 60 V Betriebsspannung vorgesehen. Dementsprechend ist auch die Elektromaschine 32 eine Niedervolt-Elektromaschine, insbesondere eine 48-V-Elektromaschine. Durch die Ausbildung als Niedervolt-Bordnetz 34 mit einer Niedervolt-Elektromaschine 32 lassen sich die Kosten des Antriebssystems 10 reduzieren, da aufgrund der niedrigeren elektrischen Spannung im System das Gefährdungsrisiko geringer und die Absicherung des Bordnetzes 34 somit einfacher und kostengünstiger bereitzustellen ist.

Die Verwendung einer 48-V-Elektromaschine 32 bietet gegenüber herkömmlichen 12-V-Elektromaschinen den Vorteil einer erhöhten Leistungsfähigkeit. Dies macht sich insbesondere bemerkbar, wenn die Elektromaschine 32 in ihrem Motorbetrieb zum Beschleunigen des Hybridfahrzeugs eingesetzt wird, aber auch bei der Rekuperation, wenn die Elektromaschine 32 in ihrem Generatorbetrieb elektrische Energie erzeugt und in das elektrische Bordnetz 34 einspeist.

Die Elektromaschine 32 ist gemäß Figur 1 in das Automatikgetriebe 16 des Antriebssystems 10 integriert. Insbesondere ist angedeutet, dass das Automatikgetriebe 16 antriebsseitig eine Kupplungsglocke 36 aufweist, wobei die Elektromaschine 32 in der Kupplungsglocke 36 aufgenommen ist und dort einen üblicherweise vorgesehenen Drehmomentwandler ersetzt.

Gemäß Figur 1 ist ferner eine elektrische Steuereinheit 38 zur Steuerung des Verbrennungsmotors 12, der Elektromaschine 32 und des als Automatikgetriebe 16 ausgebildeten Hybridfahrzeuggetriebes vorgesehen. Die elektrische Steuereinheit 38 ist ferner mit einem Aktuator 40 zur Betätigung der ersten Kupplung 28, einem Aktuator 42 zur Betätigung der zweiten Kupplung 30 sowie einem Aktuator 44 zur Betätigung der Getriebekupplung 22 verbunden. Ferner ist in Figur 1 ein Fahrpedal 46 angedeutet, durch dessen Betätigung der Fahrer des Hybridfahrzeugs einen aktiven Beschleunigungswunsch anzeigt, wobei die elektrische Steuereinheit 38 eine Betätigung des Fahrpedals 46 erfassen kann.

Die elektrische Steuereinheit 38 ist sowohl mit der Elektromaschine 32 als auch mit dem elektrischen Bordnetz 34 verbunden und kann die Elektromaschine 32 zum Beispiel vom Motorbetrieb in den Generatorbetrieb schalten, oder umgekehrt.

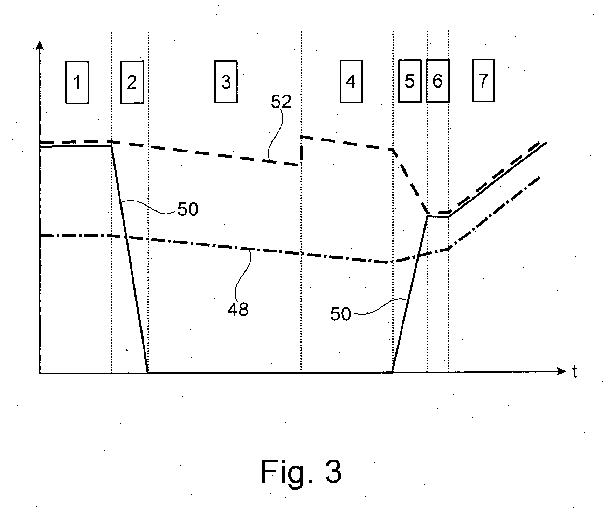

Im Folgenden wird anhand der Figuren 2 und 3 auf Verfahrensvarianten zum Betreiben des oben beschriebenen Antriebssystems 10 für ein Hybridfahrzeug eingegangen.

Die Figuren 2 und 3 zeigen jeweils ein Diagramm, bei dem eine Fahrzeuggeschwindigkeit 48, eine Drehzahl 50 des Verbrennungsmotors 12 und eine Drehzahl 52 der Schwungmassen-Antriebseinheit 24 über der Zeit t aufgetragen sind, wobei die Diagramme jeweils in Zeitintervalle 1 bis 7 unterteilt sind.

Gemäß Figur 2 ist im Zeitintervall 1 ein Betriebszustand des Antriebssystems 10 dargestellt, bei dem das Hybridfahrzeug vom Verbrennungsmotor 12 angetrieben wird und dementsprechend sowohl die Getriebekupplung 22 als auch die erste Kupplung 28 und die zweite Kupplung 30 geschlossen sind. In der dargestellten Ausführungsvariante werden im Zeitintervall 1 durch den Antrieb des Verbrennungsmotors 12 lediglich Reibungseffekte kompensiert, sodass die Fahrzeuggeschwindigkeit 48 im Wesentlichen konstant bleibt. Entsprechend weisen die Drehzahlen 50, 52 des Verbrennungsmotors 12 sowie der Schwungmassen-Antriebseinheit 24 in diesem Zeitintervall 1 ebenfalls einen konstanten Verlauf auf und sind infolge der geschlossenen ersten Kupplung 28 insbesondere identisch.

Sobald die elektrische Steuereinheit 38 erkennt, dass die Voraussetzungen für einen Wechsel in einen energiesparenden Betriebsmodus gegeben sind, wird in einem ersten Verfahrensschritt a) die erste Kupplung 28 geöffnet und der Verbrennungsmotor 12 abgeschaltet. Für diesen auch als "Motor-aus-Segeln" bezeichneten Betriebszustand muss das Fahrpedal 46 unbetätigt sein. Ferner liegt die Fahrzeuggeschwindigkeit 48 bevorzugt oberhalb eines vorgegebenen Geschwindigkeitsschwellwerts, der idealerweise so gewählt ist, dass die daraus resultierende Drehzahl der Schwungmassen-Antriebseinheit 24 bzw. die in der Schwungmassen-Antriebseinheit 24 gespeicherte Energie ausreicht, um den Verbrennungsmotor 12 zu starten.

Abgesehen von den obengenannten Voraussetzungen kann die elektrische Steuereinheit 38 noch weitere Signale empfangen, welche ein Umschalten in den Betriebszustand des "Motor-aus-Segelns" verhindern. Derartige Signale können beispielsweise durch eine zu geringe Kühlmitteltemperatur im Motorkühlkreislauf, einen niedrigen Batterieladestand, eine zu große Längsneigung der Fahrbahn oder eine aktivierte Sonderausstattung wie das Fahren im Sportmodus generiert werden.

Sind jedoch alle Voraussetzungen für den energiesparenden Betriebsmodus erfüllt, wird der Verbrennungsmotor 12 abgelegt, das heißt ausgeschaltet und über das Öffnen der ersten Kupplung 28 vom Antriebsstrang getrennt. Die Drehzahl 50 des Verbrennungsmotors 12 sinkt dementsprechend im Zeitintervall 2 rasch auf Null.

Im Zeitintervall 3 sind die Getriebekupplung 22 und die zweite Kupplung 30 geschlossen, sodass das Hybridfahrzeug weitgehend frei rollt und lediglich durch Reibungsverluste gebremst wird.

Damit die Drehzahl 52 der Schwungmassen-Antriebseinheit 24 nicht unter eine vorgegebene Mindestdrehzahl absinkt, kann die Schwungmassen-Antriebseinheit 24 im Zeitintervall 4 von der Elektromaschine 32 angetrieben werden. Die Getriebekupplung 22 wird hierzu geöffnet und die Elektromaschine 32 in den Motorbetrieb geschaltet. Das Hybridfahrzeug rollt dabei weiterhin im Wesentlichen frei, wobei Reibungsverluste nach wie vor zu einem Absinken der Fahrzeuggeschwindigkeit 48 führen.

Die Elektromaschine 32 treibt hingegen aktiv die Schwungmasse der Schwungmassen-Antriebseinheit 24 an und sorgt zumindest für eine Energieerhaltung in der Schwungmassen-Antriebseinheit 24. Mit anderen Worten hält die Elektromaschine 32 die Schwungmasse der Schwungmassen-Antriebseinheit 24 oberhalb der Mindestdrehzahl, die für einen mechanischen Impulsstart des abgelegten Verbrennungsmotors 12 ausreicht.

Am Ende des Zeitintervalls 4 wird der elektrischen Steuereinheit 38 in einem Verfahrensschritt b) ein Signal zur aktiven Fahrzeugbeschleunigung übermittelt, beispielsweise indem der Fahrer das Fahrpedal 46 betätigt.

Daraufhin wird gemäß einem Verfahrensschritt c) die zweite Kupplung 30 durch die elektrische Steuereinheit 38 geöffnet, sodass die Elektromaschine 32 und die Schwungmassen-Antriebseinheit 24 entkoppelt sind.

Anschließend wird in einem Verfahrensschritt d) die erste Kupplung 28 geschlossen. Gleichzeitig wird auch die Getriebekupplung 22 geschlossen (oder geschlossen gehalten), sodass die Elektromaschine 32 mit der Getriebe-Ausgangswelle 20 drehfest verbunden ist.

Durch das Schließen der ersten Kupplung 28 gleichen sich die Drehzahl 50 des Verbrennungsmotors 12 und die Drehzahl 52 der Schwungmassen-Antriebseinheit 24 im Zeitintervall 5 rasch an, wobei der Verbrennungsmotor 12 von der Schwungmassen-Antriebseinheit 24 durch einen mechanischen Impulsstart gestartet wird.

Ferner wird die Getriebe-Ausgangswelle 20 nach dem Schließen der Getriebekupplung 22 im Verfahrensschritt d) durch die Elektromaschine 32 angetrieben. Folglich kommt es im Zeitintervall 5 bereits unmittelbar nach der Betätigung des Fahrpedals 46 durch den Fahrer zu einer von der Elektromaschine 32 erzeugten Fahrzeugbeschleunigung. Dies wird anhand der bereits im Zeitintervall 5 der Figur 2 steigenden Fahrzeuggeschwindigkeit 48 deutlich.

Nach dem Start des Verbrennungsmotors 12 im Verfahrensschritt d) wird die zweite Kupplung 30 in einem nachfolgenden Verfahrensschritt e) wieder geschlossen (Zeitintervall 6), wobei die Elektromaschine 32 weiterhin für eine Fahrzeugbeschleunigung sorgt.

Der zugestartete und befeuerte Verbrennungsmotor 12 ist zu Beginn des Zeitintervalls 7 über die geschlossene erste Kupplung 28, die geschlossene zweite Kupplung 30 und die geschlossene Getriebekupplung 22 mit der Getriebe-Ausgangswelle 20 drehfest verbunden und kann das Hybridfahrzeug in gewünschter Weise beschleunigen. Dadurch steigen im Zeitintervall 7 sowohl die Fahrzeuggeschwindigkeit 48 als auch die Drehzahlen 50, 52 des Verbrennungsmotors 12 sowie der Schwungmassen-Antriebseinheit 24.

Aufgrund der begrenzten Leistung der Elektromaschine 32 ist die Fahrzeugbeschleunigung in den Zeitintervallen 5 und 6 geringer als die im Zeitintervall 7 durch den Verbrennungsmotor 12 bereitgestellte Fahrzeugbeschleunigung. Dennoch erhält der Fahrer bereits in den Zeitintervallen 5 und 6, also unmittelbar nach seiner Betätigung des Fahrpedals 46 die gewünschte Fahrzeugrückmeldung in Form einer spürbaren Fahrzeugbeschleunigung. Das Antriebssystem 10 reagiert somit weniger träge und sorgt beim Fahrer für ein besseres Fahrgefühl.

Die Figur 3 veranschaulicht analog zu Figur 2 eine Verfahrensvariante zum Betreiben des oben beschriebenen Antriebssystems 10 für ein Hybridfahrzeug.

Die in Figur 3 dargestellte Verfahrensvariante unterscheidet sich von der Verfahrensvariante gemäß Figur 2 lediglich dadurch, dass vor dem Signal zur aktiven Fahrzeugbeschleunigung im Verfahrensschritt b) die Getriebekupplung 22 geschlossen (oder geschlossen gehalten) und die Elektromaschine 32 in einen Generatorbetrieb geschaltet wird. Mit anderen Worten erfolgt in den Zeitintervallen 3 und 4 eine Rekuperation, das heißt eine Umsetzung der kinetischen Fahrzeugenergie in elektrische Energie durch die im Generatorbetrieb befindliche Elektromaschine 32.

Durch den Widerstand der Elektromaschine 32 im Generatorbetrieb entsteht eine größere Fahrzeugverzögerung, sodass die Fahrzeuggeschwindigkeit 48 in den Zeitintervallen 3 und 4 gemäß Figur 3 stärker abnimmt als die Fahrzeuggeschwindigkeit 48 in den Zeitintervallen 3 und 4 gemäß Figur 2.

Da sich die Elektromaschine 32 im Zeitintervall 4 gemäß Figur 3 im Generatorbetrieb befindet, kann sie die Schwungmassen-Antriebseinheit 24 nicht antreiben.

Das Absinken der Drehzahl 52 der Schwungmassen-Antriebseinheit 24 unter die vorgegebene Mindestdrehzahl wird in diesem Fall durch eine Getriebeschaltstrategie des Automatikgetriebes 16 verhindert. Wird die Mindestdrehzahl der Schwungmassen-Antriebseinheit 24 erreicht, so wird durch Zurückschalten des Automatikgetriebes 16 in einen niedrigeren Gang die Drehzahl der Getriebe-Eingangswelle 18 sowie über die geschlossene zweite Kupplung 30 auch die Drehzahl der Zwischenwelle 26 und damit die Drehzahl 52 der Schwungmassen-Antriebseinheit 24 sprunghaft erhöht (siehe Figur 3 im Übergangsbereich der Zeitintervalle 3 und 4). Dadurch wird sichergestellt, dass die Drehzahl 52 bzw. die in der Schwungmassen-Antriebseinheit 24 gespeicherte Energie ausreicht, um einen mechanischen Impulsstart des Verbrennungsmotors 12 durchzuführen.

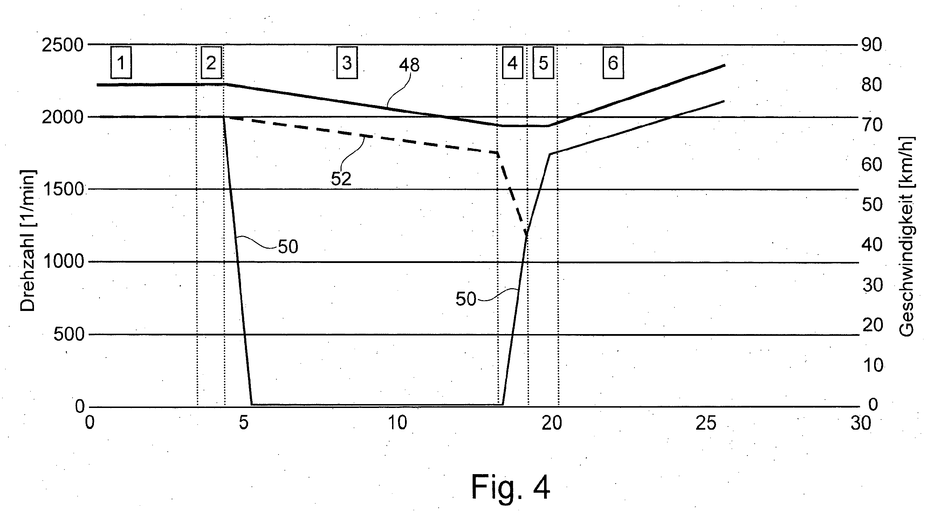

Im Folgenden wird das Verfahren zum Motor-Aus-Segeln (Verbrennungsmotor ist abgestellt, Verbrennungsmotorwelle 14 steht still, Fahrzeug bewegt sich, Fahrzeugbremseinrichtung ist nicht aktiviert) anhand von Figur 4 anschaulich beschrieben. Die in den Rechtecken abgebildeten Zahlen 1 bis 6 kennzeichnen einzelne zeitliche Phasen 1 bis 6. Während der Fahrt (Fahrzeuggeschwindigkeit 48 konstant, Phase 1) sind die Drehzahl der Schwungmassen-Antriebseinheit 52 und die Drehzahl der Verbrennungsmotorwelle 50 synchron, diese Rotieren also mit gleicher Drehzahl, da die erste Kupplung geschlossen ist.

Für das Motor-Aus-Segeln befindet sich das Hybridfahrzeug im Segelzustand, dazu wird insbesondere der Fuß vom Fahrpedal genommen und die Geschwindigkeit 48 des Fahrzeuges, liegt oberhalb einer vorgebbaren Geschwindigkeitsschwelle, vorzugsweise ist diese Geschwindigkeitsschwelle bei 30 km/h oder mehr, bevorzugt bei 50 km/h oder mehr und besonders bevorzugt bei 80 km/h oder mehr.

In der Phase 2 wird der Verbrennungsmotor abgelegt, d.h. dieser wird abgestellt, dazu wird die erste Kupplung geöffnet und der Verbrennungsmotor ist damit vollständig von der Drehschwingungsreduzierungs-Einrichtung getrennt. Die Drehzahl der Verbrennungsmotorwelle 50 sinkt innerhalb weniger Umdrehungen auf null, da die Schwungmasse des Verbrennungsmotors gering ist. Der Verbrennungsmotor ist somit vom Antriebsstrang getrennt und verursacht insbesondere im Schubbetrieb keine Schleppverluste.

In Phase 3 rollt das Fahrzeug frei, insbesondere ist kein Schleppmoment des Verbrennungsmotors auf die antreibbaren Räder wirksam. Die erste Kupplung ist, wie dargelegt, geöffnet, die zweite Kupplung bleibt jedoch geschlossen, so dass die Schwungmassen-Antriebseinheit und damit die Drehschwingungsreduzierungs-Einrichtung mit der Drehzahl der Getriebe-Eingangswelle mit rotiert. Durch das erfindungsgemäß Steuerungsverfahren wird die Drehzahl der Schwungmassen-Antriebseinheit oberhalb eines definierbaren Mindestwertes gehalten, dieser Mindestwert ist, abhängig vom Randbedingungen vorgebbar. Dabei orientiert sich der Mindestwert insbesondere an der zum Starten des Verbrennungsmotors notwendigen Energie, vorzugsweise kann der Mindestwert rechnerisch in einer Simulation oder versuchstechnisch bestimmt werden und kann so gewählt sein, dass mit der Schwungmassen-Antriebseinheit Leistung zum Starten des Verbrennungsmotors und gleichzeitig zum Beschleunigen des Hybridfahrzeugs zur Verfügung stellbar ist.

Die Geschwindigkeit des Hybridfahrzeuges nimmt, bei einer Bewegung in der Ebene die hier angenommen wird, weiterhin leicht ab (Roll- und Luftwiderstand, Rekuperationsmoment der Elektromaschine etc. verringern die Geschwindigkeit des Fahrzeuges), diese Geschwindigkeitsabnahme ist durch den fallenden Verlauf der Fahrzeuggeschwindigkeit 48 in Phase 3 visualisiert. Ein Ausstieg aus dem Zustand Motor-Aus-Segeln, so dass also eine Startanforderung an den Verbrennungsmotor vorliegt, kann insbesondere durch Betätigung des Bremspedals, des Fahrpedals, bei Erreichen/Unterschreiten einer Geschwindigkeitsschwelle oder bei Anforderung aus dem elektrischen Bordnetz des Hybridfahrzeugs, insbesondere bei Unterschreiten eines minimalen Ladezustands eines Akkumulators, erreicht werden. Aufgrund der Startaufforderung wird der Verbrennungsmotor durch Ausführen des Verfahrens gemäß Mode4 gestartet (Phase 4 und 5).

Beim Starten fällt zunächst die Drehzahl 52 der Schwungmassen-Antriebseinheit ab (Phase 4), weil von der Schwungmassen-Antriebseinheit über die geschlossene erste Kupplung Leistung zum Beschleunigen der Verbrennungsmotorwelle, deren Drehzahl 50 sich erhöht, auf die Verbrennungsmotorwelle übertragen wird. Die Elektromaschine gibt Leistung zum Beschleunigen des Hybridfahrzeugs an die Getriebe-Eingangswelle ab.

Nach Erreichen der Startdrehzahl des Verbrennungsmotors wird dieser in den befeuerten Betrieb versetzt und gibt Leistung an die Schwungmassen-Antriebseinheit ab, dadurch erhöht sich die Drehzahl 50, 52 der Verbrennungsmotorwelle und der Schwungmassen-Antriebseinheit (Phase 5).

Sobald die Drehzahl 50 der Verbrennungsmotorwelle das richtige Niveau erreicht hat und sowohl die erste Kupplung, die zweite Kupplung und die Getriebekupplung geschlossen sind, wird das Hybridfahrzeug durch Leistungsabgabe des Verbrennungsmotors beschleunigt (Phase 6).

Zusätzlich kann im Betriebszustand Motor-Aus-Segeln auch die Energierückgewinnung betrieben werden (Rekuperation). Wie zuvor erläutert befindet sich das Hybridfahrzeug dazu im Segelzustand, entsprechend Phase 3.

Der Verbrennungsmotor ist vom Antriebsstrang (Schwungmassen-Antriebseinheit, Fahrzeuggetriebe) über die geöffnete erste Kupplung getrennt. Der Verbrennungsmotor wird abgestellt. Im Gegensatz zum oben beschriebenen Fall ohne Rekuperation, wird die Geschwindigkeit des Fahrzeuges durch ein Rekuperationsmoment, welches von der Elektromaschine entgegen der Drehrichtung der Getriebe-Eingangswelle auf diese aufgebracht wird (negatives Drehmoment), stärker abgebremst als im vorherigen Fall, dies würde sich im Diagramm von Figur 4, durch einen stärkeren Abfall der Fahrzeuggeschwindigkeit 48, so wie der Drehzahl 52 der Schwungmassen-Antriebseinheit widerspiegeln.

Die kinetische Energie des Hybridfahrzeugs und der Schwungmassen-Antriebseinheit werden bei der Rekuperation in der Elektromaschine im Generatorbetrieb in elektrische Energie gewandelt und werden in das Fahrzeugbordnetz eingespeist.

Eine Ausstiegsaufforderung aus der Rekuperation, also aus dem Betriebsmodus (Mode5) mit Rekuperation erfolgt beispielsweise durch Betätigen des Fahrpedals oder bei Erreichen einer Geschwindigkeitsschwelle. Der Ablauf des Ausstiegs erfolgt analog dem zuvor erläuterten Verfahren ohne Rekuperation (Mode5) in den Phase 4 und 5, Figur 4.

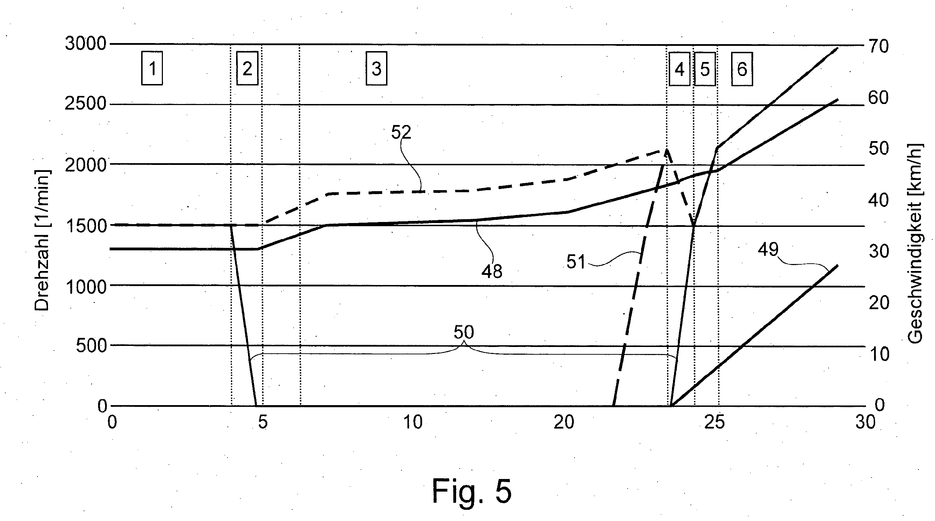

In Figur 5 sind Fahrsituation aufgezeigt, bei welchen das Hybridfahrzeug, wenigstens zeitweise alleine durch die Elektromaschine (E-fahren) angetrieben wird, währen der Verbrennungsmotor abgestellt ist (Zero-Emission). Der Verbrennungsmotor wird dabei mittels eines Verfahrens gemäß Mode4 gestartet und zum Antreiben des Hybridfahrzeugs über die Elektromaschine wird das Antriebssystem gemäß einem Verfahren nach Mode5 in der Variante Motor-Aus-E-fahren betrieben.

Im Unterschied zu einem der zuvor erläuterten Betriebszustände, bei welchen der Verbrennungsmotor abgestellt ist und die Elektromaschine zur Energierückgewinnung genutzt wird oder passiv mit der Getriebe-Eingangswelle mit rotiert (Segeln), wird im vorliegenden Betriebszustand die Elektromaschine im Motorbetrieb betrieben, stellt also ein Antriebsdrehmoment in Richtung der Drehrichtung der Getriebe-Eingangswelle zur Verfügung. In Phase 1 bewegt sich das Hybridfahrzeug mit konstanter Fahrzeuggeschwindigkeit 48, angetrieben durch den Verbrennungsmotor. In Phase 2 wird der Verbrennungsmotor abgestellt, die Drehzahl 50 fällt auf null ab, die erste Kupplung ist geöffnet die Drehzahl 52 der Schwungmassen-Antriebseinheit bleibt konstant.

In Phase 3 beschleunigt die Elektromaschine das Fahrzeug, die Drehzahl 52 der Schwungmassen-Antriebseinheit und die Fahrzeuggeschwindigkeit 48 steigen.

In Phase 2 und 3 ist die erste Kupplung offen, die zweite Kupplung geschlossen, so ist es ermöglicht, dass die in Phase 3 stillstehende Verbrennungsmotorwelle von der Schwungmassen-Antriebseinheit entkoppelt ist, die Schwungmassen-Antriebseinheit aber ist drehfest mit der Getriebe-Eingangswelle verbunden ist und Elektromaschine stellt das für den Antrieb des Hybridfahrzeug benötigte Drehmoment an der Getriebe-Eingangswelle zur Verfügung, so genanntes E-Fahren.

Dabei ist das E-Fahren entsprechend dem Leistungsvermögen der Elektromaschine möglich. Untersuchungen haben gezeigt, dass im Rahmen der vorgeschlagenen Niedervolt Elektromaschine mit einer Nennspannung von 48V Fahrbedarfe bis ca. 15 - 20 kW dargestellt werden; dies entspricht bei einem Hybridfahrzeug mit ca. 1,5t Fahrzeuggewicht Fahrgeschwindigkeiten bis ca. 60 km/h und einer Beschleunigung von ca. 1,5 m/s².

Soweit die Beschleunigungsanforderung in diesem Geschwindigkeitsbereich bis ca. 60 km/h, insbesondere gemäß dem Fahrpedal-Fahrerwunsch, das Beschleunigungsvermögen der Elektromaschine übersteigt, wird mittels Schwungmassenstart der Verbrennungsmotor mit einem Verfahren gemäß Mode4 sehr schnell und komfortabel gestartet und dieser höheren Beschleunigungsbedarfe kann durch den Verbrennungsmotor realisiert werden, dabei ist der Start des Verbrennungsmotor in den Phase 4 und 5 dargestellt. Beim Starten des Verbrennungsmotors fällt zunächst die Drehzahl 52 der Schwungmassen-Antriebseinheit ab und gleichzeitig steigt die Drehzahl 50 der Verbrennungsmotorwelle. Der Verbrennungsmotor wird nach dem Erreichen der Startdrehzahl in den befeuerten Betrieb versetzt und beschleunigt dann die Schwungmassen-Antriebseinheit (Phase 5). In Phase 6 wird der Verbrennungsmotor maßgebend zur Beschleunigung des Hybridfahrzeugs herangezogen, die erste, zweite Kupplung und Getriebekupplung sind dafür geschlossen.

E-Fahren mit abgestelltem Verbrennungsmotor ist mit dem vorgeschlagenen Antriebssystem auch aus dem Fahrzeugstillstand ermöglicht. Dabei entfallen die Phasen 1 und 2 aus Figur 5. Phase 3 aus Abbildung 5 entspricht dann veränderlich darstellbaren E-Fahrphasen oder in einem weiteren Fall dem Fahrzeugstillstand. Beim E-Fahren aus dem Stillstand der Fahrzeugs und damit aus dem Stillstand der Schwungmassen-Antriebseinheit wir von der Elektromaschine zunächst die Leistung für den Antrieb des Hybridfahrzeugs bereitgestellt, zusätzlich wird die Schwungmassen-Antriebseinheit beschleunigt. Während des Zustarts des Verbrennungsmotors (Phase 4 und 5) mittels eines Verfahrens gemäß Mode4 stellt die Elektromaschine wie dargelegt weiterhin den Fahrerwunsch, soweit leistungs- und momentenmäßig möglich, und in Phase 6 wird der Verbrennungsmotor zur Fahrzeugbeschleunigung herangezogen.

Bei einem Initialstart des Verbrennungsmotors ergibt sich ein Drehzahlverlauf 51 für die Schwungmassen-Antriebseinheit, die Drehzahl 52 der Schwungmassen-Antriebseinheit in der Phase 4 und 5 bleibt unverändert. Die Fahrzeuggeschwindigkeit 49 für den Initialstart zeigt, dass das Hybridfahrzeug noch während des Hochlaufs des Verbrennungsmotors beschleunigt. Der Verlauf der Drehzahl 51 für die Schwungmassen-Antriebseinheit ergibt sich durch die Prediktion des Startvorgangs. Die Drehzahl 51 der Schwungmassen-Antriebseinheit wird erhöht, sobald eine Person auf dem Fahrersitz Platzgenommen hat. Zu Beginn der Phase 4 wird der Starttaster betätigt und die Schwungmassen-Antriebseinheit mit der Verbrennungsmotorwelle über die erste Kupplung gekoppelt. Das Hybridfahrzeug kann aber schon während dieses Startvorgangs beschleunigen, da über die Elektromaschine und die Schwungmassen-Antriebseinheit Antriebsleistung über die zweite Kupplung und die Getriebekupplung zu den antreibbaren Rädern übertragbar ist.

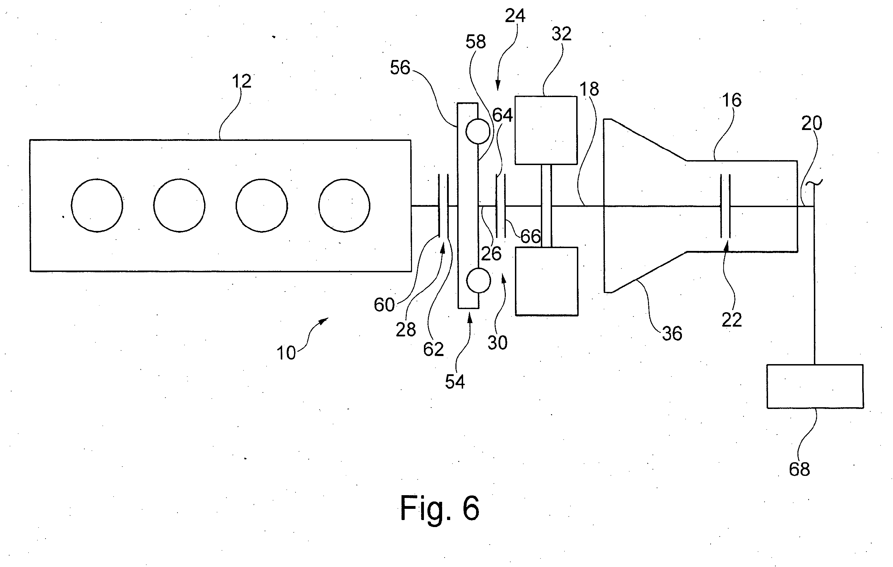

Die Figur 6 zeigt ein Antriebssystem 10 für ein Hybridfahrzeug, mit einem Verbrennungsmotor 12, der eine Verbrennungsmotorwelle 14 aufweist und antreiben kann, einem Fahrzeuggetriebe 16, das antriebsseitig eine koaxial zur Verbrennungsmotorwelle 14 angeordnete Getriebe-Eingangswelle 18 und abtriebsseitig eine koaxial zur Verbrennungsmotorwelle 14 angeordnete Getriebe-Ausgangswelle 20 aufweist, sowie einer Getriebekupplung 22 zum Koppeln oder Entkoppeln der Getriebe-Eingangswelle 18 und der Getriebe-Ausgangswelle 20.

Dabei ist das Fahrzeuggetriebe, wie auch in Figur 1, stark vereinfach dargestellt. Das Fahrzeuggetriebe 16 ist ein weist ein Vielzahl schaltbarer Gänge auf, mit welchen das Übersetzungsverhältnis zwischen der Getriebe-Eingangs- und der Getriebeausgangswelle veränderbar ist.

Ferner umfasst das Antriebssystem 10 eine Schwungmassen-Antriebseinheit 24, die axial zwischen dem Verbrennungsmotor 12 und dem Fahrzeuggetriebe 16 angeordnet ist und auf einer koaxial zur Verbrennungsmotorwelle 14 angeordneten Zwischenwelle 26 sitzt, eine erste Kupplung 28 zum Koppeln oder Entkoppeln der Verbrennungsmotorwelle 14 und der Zwischenwelle 26. Die erste Kupplung 28 weist eine antriebsseitige Eingangsseite 60 und eine abtriebsseitige Ausgangsseite 60 auf. Weiter weist das Antriebssystem 10 eine zweite Kupplung 30 zum Koppeln oder Entkoppeln der Zwischenwelle 26 und der Getriebe-Eingangswelle 18 auf. Die zweite Kupplung 30 weist eine antriebsseitige Eingangsseite 64 und eine abtriebsseitige Ausgangsseite 66 auf. Weiter weist das Antriebssystem 10 eine Elektromaschine 32 auf, die auf der Getriebe-Eingangswelle 18 angeordnet ist und diese in einem Motorbetrieb antreiben oder in einem Generatorbetrieb bremsen kann.

Die Schwungmassen-Antriebseinheit 24 weist ein Zweimassenschwungrad 54 mit einer DU-Eingangswelle 56 und einer DU-Ausgangswelle 58 auf. Das Zweimassenschwungrad 54 bildet einen Energiespeicher. Unabhängig von der konkreten Konstruktion der Schwungmassen-Antriebseinheit 24 ermöglicht deren Schwungmasse zusammen mit der ersten Kupplung 28 einen mechanischen Impulsstart des abgelegten Verbrennungsmotors 12 bei stehendem oder rollendem Fahrzeug. Folglich kann auf eine elektrische Startvorrichtung für den Verbrennungsmotor 12 verzichtet werden. Das Zweimassenschwungrad 54 ist vollständig zwischen der ersten und der zweiten Kupplung 28, 30 angeordnet, die DU-Eingangsseite ist drehfest mit der abtriebsseitigen Ausgangsseite 62 der ersten Kupplung 28 gekoppelt und die DU-Ausgangsseite ist dauerhaft drehfest mit der Zwischenwelle 26 gekoppelt, welche dauerhaft drehfest mit der antriebsseitigen Eingangsseite 64 der zweiten Kupplung gekoppelt ist.

Bezüglich insbesondere eines Steuergeräts und Bordnetzes, in Figur 6 nicht dargestellt, wird auf die Figur 1 verwiesen. Die Antriebsleistung wird über das Fahrzeuggetriebe 16 zu dem einen dargestellten, antreibbaren Rad 68 übertragen, dabei ist der grundsätzliche Aufbau des Antriebssystems auf Front-, Heck- und Allradantrieb für Fahrzeuge übertragbar.

Die Elektromaschine 32 ist gemäß Figur 6 in das Fahrzeuggetriebe 16 des Antriebssystems 10 integriert. Insbesondere ist angedeutet, dass das Fahrzeuggetriebegetriebe 16 antriebsseitig eine Kupplungsglocke 36 aufweist, wobei die Elektromaschine 32 in der Kupplungsglocke 36 aufgenommen ist und dort einen üblicherweise vorgesehenen Drehmomentwandler ersetzt.

Zur Steuerung des in Figur 6 dargestellten Antriebssystems 10 über Aktuatoren, Steuergerät und Fahrpedal (hier nicht dargestellt) wird auf die Figur 1 verwiesen.

Aus dem vorgeschlagenen Antriebssystem und der Steuerung dieses Antriebssystem nach dem vorgeschlagenen Verfahren ergibt sich eine Vielzahl von Vorteilen unter anderem,
- In Bezug auf die Drehimpulserhaltung beim Start des Verbrennungsmotor, hier tritt kein äußeres Moment auf (Beschleunigung der Verbrennungsmotorwelle / Abbremsung der Schwungmassen-Antriebseinheit), so dass dieses nicht vorhandene äußere Moment nicht an den Motorlagern abgestützt werden muss und diese entlastet sind
- Weiter ist das sogenannte Startschütteln reduziert, insbesondere dadurch dass der Verbrennungsmotor auf eine hohe Startdrehzahl beschleunigt wird
- Durch die Zuordnung der gesamten Drehschwingungsreduzierungs-Einrichtung ergeben sich günstige Drehmassenverhältnisse (Drehmasse Verbrennungsmotor klein / Drehmasse Schwungmassen-Antriebseinheit groß) so dass kurze Zustartzeiten des Verbrennungsmotors realisierbar sind. Untersuchungen haben gezeigt, dass für den Verbrennungsmotor eine Zustartzeit von <100ms erreichbar ist
- Nachdem die Energie für das Starten des Verbrennungsmotors im Zeitpunkt des Starts aus der Schwungmassen-Antriebseinheit entnommen wird (rein mechanisch) ergibt sich keine Belastung des Bordnetzes beim Start des Verbrennungsmotor und daher sind keine Bordnetzstabilisierungsmaßnahmen zur Vermeidung Spannungseinbrüche während des Verbrennungsmotorstarts erforderlich
- Insgesamt ist das Antriebssystem derart steuerbar, dass dieses auf unterschiedlichste Fahrsituationen schnell reagiert
- Untersuchungen haben gezeigt, dass der Motor-Start-Stopp-Betrieb, beispielsweise für einen Ampelhalt besonders komfortabel darstellbar ist,
- Wie mit den einzelnen Betriebsmodi dargestellt lassen sich mit dem Antriebssystem unterschiedlichste Fahrsituationen abbilden, ohne dass dazu eine Hochvolt-Antriebsmaschine vorzusehen ist
- Die Elektromaschine kann auf den Fahrbetrieb optimiert werden da die ansonsten oft dominierenden Kaltstartanforderungen an die Elektromaschine entfallen, da insbesondere der Verbrennungsmotoren Kaltstart (hohes Losbrechmoment des Verbrennungsmotors) mittels der Schwungmassen-Antriebseinheit abgebildet wird, insbesondere entfällt so gegenüber herkömmlichen Antriebssystem eine weitere elektrische Zustarteinheit, wie insbesondere ein Ritzelstarter.

**Bezugszeichenliste:**

| | |
|---|---|
| 10 | Antriebssystem |
| 12 | Verbrennungsmotor |
| 14 | Verbrennungsmotorwelle |
| 16 | Fahrzeuggetriebe / Automatikgetriebe |
| 18 | Getriebe-Eingangswelle |
| 20 | Getriebe-Ausgangswelle |
| 22 | Getriebekupplung |
| 24 | Schwungmassen-Antriebseinheit |
| 26 | Zwischenwelle |
| 28 | Erste Kupplung |
| 30 | Zweite Kupplung |
| 32 | Elektromaschine |
| 34 | Niedervolt-Bordnetz |
| 36 | Kupplungsglocke |
| 38 | Steuereinheit / Steuergerät |
| 40 | Aktuator zum Betätigen der ersten Kupplung |
| 42 | Aktuator zum Betätigen der zweiten Kupplung |
| 44 | Aktuator zum Betätigen der Getriebekupplung |
| 46 | Fahrpedal |
| 48 | Fahrzeuggeschwindigkeit |
| 49 | Fahrzeuggeschwindigkeit bei Initialstart |
| 50 | Drehzahl der Verbrennungsmotorwelle |
| 51 | Drehzahl der Schwungmassen-Antriebseinheit bei Initialstart |
| 52 | Drehzahl der Schwungmassen-Antriebseinheit |
| 54 | Drehschwingungsreduzierungs-Einrichtung |
| 56 | DU-Eingangswelle |
| 58 | DU-Ausgangswelle |
| 60 | Eingangsseite der ersten Kupplung |
| 62 | Ausgangsseite der ersten Kupplung |
| 64 | Eingangsseite der zweiten Kupplung |
| 66 | Ausgangsseite der zweiten Kupplung |
| 68 | Antreibbares Rad |

## Patentansprüche

1. Antriebssystem für ein Hybridfahrzeug, mit einem Verbrennungsmotor (12), der eine Verbrennungsmotorwelle (14) aufweist, welche zur Abgabe einer Antriebsleistung in Richtung auf antreibbare Räder des Hybridfahrzeugs eingerichtet ist,
einem Fahrzeuggetriebe (16), das antriebsseitig eine Getriebe-Eingangswelle (18) und abtriebsseitig eine Getriebe-Ausgangswelle (20) aufweist und mit einer Getriebekupplung (22) zum Koppeln oder Entkoppeln der Getriebe-Eingangswelle (18) und der Getriebe-Ausgangswelle (20) und mit einer Schwungmassen-Antriebseinheit (24), die, bezogen auf die Übertragung der Antriebsleistung zwischen der Verbrennungsmotorwelle (14) und der Getriebe-Eingangswelle (18) angeordnet ist sowie
mit einer Zwischenwelle (26) und einer ersten Kupplung (28) zum Koppeln oder Entkoppeln der Verbrennungsmotorwelle (14) mit der Zwischenwelle (26) und mit einer zweiten Kupplung (30) zum Koppeln oder Entkoppeln der Zwischenwelle (26) mit der Getriebe-Eingangswelle (18) sowie mit einer Elektromaschine (32), die mit der Getriebe-Eingangswelle (18) drehmomentleitend verbunden ist und durch welche die Getriebe-Eingangswelle (18) in einem Motorbetrieb antreibbar ist, wobei die Schwungmassen-Antriebseinheit eine Drehschwingungsreduzierungs-Einrichtung mit einer antriebsseitigen DU-Eingangswelle (56) und einer abtriebsseitigen DU-Ausgangswelle (58) aufweist und die Drehschwingungsreduzierungs-Einrichtung (54) zum Verringern von Drehschwingungen der Zwischenwelle (26) eingerichtet ist,
**dadurch gekennzeichnet, dass**
die Drehschwingungsreduzierungs-Einrichtung (54), bezogen auf die Übertragung der Antriebsleistung, vollständig zwischen der ersten Kupplung (28) und der zweiten Kupplung (30) angeordnet ist.

2. Antriebssystem für ein Hybridfahrzeug gemäß Anspruch 1, **dadurch gekennzeichnet, dass** die Drehschwingungsreduzierungs-Einrichtung eine dem Verbrennungsmotor zugewandte Primärseite und eine dem Fahrzeuggetriebe zugewandte Sekundärseite umfasst.

3. Antriebssystem für ein Hybridfahrzeug gemäß einem der vorhergehenden Ansprüche, **dadurch gekennzeichnet, dass** die DU-Eingangswelle zur Reduzierung der Drehschwingungen gegenüber der DU-Ausgangswelle verdrehbar ist und
dass die DU-Eingangswelle und die DU-Ausgangswelle konzentrisch zueinander und konzentrisch zur Verbrennungsmotorwelle angeordnet sind.

4. Antriebssystem nach einem der vorhergehenden Ansprüche, **dadurch gekennzeichnet, dass** die Drehschwingungsreduzierungs-Einrichtung als drehzahladaptiver Tilger ausgebildet ist.

5. Antriebssystem nach Anspruch 4, **dadurch gekennzeichnet, dass** der drehzahladaptive Tilger zur Drehzahladaption ein Fliehkraftpendel aufweist oder als solches ausgebildet ist.

6. Antriebssystem für ein Hybridfahrzeug gemäß einem der vorhergehenden Ansprüche, **dadurch gekennzeichnet, dass** die Drehschwingungsreduzierungs-Einrichtung als semiaktiver oder aktiver Tilger ausgebildet ist.

7. Antriebssystem nach einem der vorhergehenden Ansprüche, **dadurch gekennzeichnet, dass** die Elektromaschine (32) eine Niedervolt-Elektromaschine mit einer Betriebsspannung von weniger als 60 V ist.

8. Antriebssystem nach einem der vorhergehenden Ansprüche, **dadurch gekennzeichnet, dass** die Elektromaschine (32) in das Fahrzeuggetriebe (16) integriert ist.

9. Antriebssystem nach einem der vorhergehenden Ansprüche, **dadurch gekennzeichnet, dass**
das Fahrzeuggetriebe (16) als Automatikgetriebe oder als automatisiert schaltbares Fahrzeuggetriebe ausgebildet ist.

10. Antriebssystem nach einem der vorhergehenden Ansprüche, **dadurch gekennzeichnet, dass** das Fahrzeuggetriebe (16) antriebsseitig eine Kupplungsglocke (36) aufweist, wobei die Elektromaschine (32) in der Kupplungsglocke (36) aufgenommen ist.

11. Antriebssystem nach einem der vorhergehenden Ansprüche, **dadurch gekennzeichnet, dass** ein elektrisches Bordnetz (34) vorgesehen ist, wobei die Elektromaschine (32) auch als Generator betreibbar ist und in einem Generatorbetrieb elektrische Energie in das elektrische Bordnetz (34) einspeist.

12. Verfahren zum Betreiben eines Antriebssystems (10) gemäß einem der vorhergehenden Ansprüche, welches eine elektrische Steuereinheit (38) aufweist, wobei das Verfahren folgende Schritte umfasst:
a) in einem Betriebszustand des Antriebssystems (10) wird die erste Kupplung (28) geöffnet und der Verbrennungsmotor (12) abgeschaltet beziehungsweise befindet sich dieser bereits in einem abgeschalteten Zustand;
c) über die geschlossene zweite Kupplung (30) wird die Schwungmassen-Antriebseinheit (24) mittels der Elektromaschine (32) mindestens auf eine Schwungmassen-Startdrehzahl hochgefahren oder mindestens auf dieser Schwungmassen-Startdrehzahl gehalten,
d) der elektrischen Steuereinheit (38) wird ein Signal zur aktiven Fahrzeugbeschleunigung übermittelt, wodurch ein Zustart des Verbrennungsmotors erforderlich wird;
e) daraufhin wird die zweite Kupplung (30) durch die elektrische Steuereinheit (38) geöffnet;
f) anschließend wird die erste Kupplung (28) geschlossen, so dass über Drehimpulsausgleich zwischen Schwungmassen-Antriebseinheit (24) und Verbrennungsmotorwelle (14) der Verbrennungsmotor auf eine Verbrennungsmotor-Startdrehzahl hochgeschleppt wird;
g) der Verbrennungsmotor wird ausgehend von der Verbrennungsmotor-Startdrehzahl im befeuerten Betrieb betrieben und auf eine Verbrennungsmotor-Zieldrehzahl hochbeschleunigt wird.

13. Verfahren zum Betreiben eines Antriebssystems (10) gemäß Anspruch 12, wobei nach Erreichen der Verbrennungsmotor-Startdrehzahl, insbesondere nach Erreichen der Verbrennungsmotor-Zieldrehzahl, die zweite Kupplung (30) geschlossen wird und die Getriebekupplung (22) geschlossen ist oder geschlossen wird, so dass eine Leistungsübertragung beziehungsweise Kraftfluss zwischen der Verbrennungsmotorwelle (14) und den antreibbaren Rädern des Hybridfahrzeugs hergestellt ist.

14. Verfahren zum Betreiben eines Antriebssystems (10) gemäß einem der Ansprüche 12 oder 13, wobei in einem Verfahrensschritt b) welcher unmittelbar nach dem Verfahrensschritt a) und vor Verfahrensschritt c) ausgeführt wird, die Elektromaschine (32) sich bei vollständig geschlossener oder teilweise geschlossener Getriebekupplung (22) im Kraftschluss mit den antreibbaren Rädern des Hybridfahrzeugs befindet, um so ein positives oder negatives Drehmoment an die antreibbaren Räder des Hybridfahrzeugs bereit zu stellen.

15. Verfahren zum Betreiben eines Antriebssystems (10) nach Anspruch 14,
**dadurch gekennzeichnet,**
**dass** bei abgeschaltetem Verbrennungsmotor und bei Fahrzeugstillstand oder Kriechgeschwindigkeit des Fahrzeugs die Getriebekupplung (22) vor Schritt b) in schlupfenden Betrieb gebracht wird, so dass sich die Elektromaschine (32) im Kraftschluss mit den antreibbaren Rädern des Hybridfahrzeugs befindet, um so ein positives oder negatives Moment an die antreibbaren Räder des Hybridfahrzeugs zu stellen, zeitgleich die zweite Kupplung (30) geschlossen ist oder wird, so dass sich die Elektromaschine (32) und die Schwungmassen-Antriebseinheit (24) im verdrehfesten Kraftfluss zueinander befinden, und die Elektromaschine auf Schwungmassen-Startdrehzahl oder darüber betrieben wird, wobei die Schwungmassen-Startdrehzahl höher ist, als die sich aus der aktuellen Fahrzeuggeschwindigkeit über die Raddrehzahl ergebende Drehzahl der Elektromaschine im Falle einer vollständig geschlossenen Getriebekupplung (22).

16. Verfahren zum Betreiben eines Antriebssystems (10) nach einem der Ansprüche 12 bis 15, **dadurch gekennzeichnet,**
**dass** die Schwungmassen-Startdrehzahl in einem Bereich zwischen 1000 U/min bis 1400 U/min liegt.

17. Verfahren zum Betreiben eines Antriebssystems (10) nach einem der Ansprüche 12 bis 16, **dadurch gekennzeichnet,**
**dass** die Schwungmassen-Startdrehzahl nach einem Initialisieren des Fahrzeugs bereits im Fahrzeugstillstand über die Elektromaschine (32) eingeregelt wird.

18. Verfahren zum Betreiben eines Antriebssystems (10) nach einem der Ansprüche 12 bis 16, **dadurch gekennzeichnet,**
**dass** aus dem Fahrzeugstillstand heraus die Schwungmassen-Startdrehzahl zeitgleich zum ersten Stellen eines positiven Momentes der Elektromaschine (32) an die antreibbaren Räder des Hybridfahrzeugs eingeregelt wird.

## Claims

1. A drive system for a hybrid vehicle, with an internal combustion engine (12) which has an internal combustion engine shaft (14) which is set up to output a drive power in the direction of driveable wheels of the hybrid vehicle,
a vehicle transmission (16) which has on the drive side a transmission input shaft (18) and on the output side a transmission output shaft (20), and with a transmission clutch (22) for coupling or decoupling the transmission input shaft (18) and the transmission output shaft (20), and with a centrifugal-mass drive unit (24) which, relative to the transmission of the drive power, is arranged between the internal combustion engine shaft (14) and the transmission input shaft (18), and also
with an intermediate shaft (26) and a first clutch (28) for coupling or decoupling the internal combustion engine shaft (14) to/from the intermediate shaft (26) and with a second clutch (30) for coupling or decoupling the intermediate shaft (26) to/from the transmission input shaft (18), and also with an electric machine (32) which is connected in torque-transferring manner to the transmission input shaft (18) and by which the transmission input shaft (18) can be driven in engine operation, wherein the centrifugal-mass drive unit has a torsional-vibration reduction means with a drive-side DU input shaft (56) and an output-side DU output shaft (58), and the torsional-vibration reduction means (54) is set up to reduce torsional vibrations of the intermediate shaft (26),
**characterised in that**
the torsional-vibration reduction means (54), relative to the transmission of the drive power, is arranged completely between the first clutch (28) and the second clutch (30).

2. A drive system for a hybrid vehicle according to Claim 1, **characterised in that** the torsional-vibration reduction means comprises a primary side facing the internal combustion engine and a secondary side facing the vehicle transmission.

3. A drive system for a hybrid vehicle according to one of the preceding claims,
**characterised in that** the DU input shaft can be turned relative to the DU output shaft in order to reduce the torsional vibrations, and
**in that** the DU input shaft and the DU output shaft are arranged concentrically with each other and concentrically with the internal combustion engine shaft.

4. A drive system according to one of the preceding claims, **characterised in that** the torsional-vibration reduction means is designed as a speed-adaptive mass damper.

5. A drive system according to Claim 4, **characterised in that** the speed-adaptive mass damper for speed adaptation has or is designed as a centrifugal pendulum.

6. A drive system for a hybrid vehicle according to one of the preceding claims,
**characterised in that** the torsional-vibration reduction means is designed as a semi-active or active mass damper.

7. A drive system according to one of the preceding claims, **characterised in that** the electric machine (32) is a low-voltage electric machine with an operating voltage of less than 60 V.

8. A drive system according to one of the preceding claims, **characterised in that** the electric machine (32) is integrated in the vehicle transmission (16).

9. A drive system according to one of the preceding claims, **characterised in that**
the vehicle transmission (16) is designed as an automatic transmission or as an automatically selectable vehicle transmission.

10. A drive system according to one of the preceding claims, **characterised in that** the vehicle transmission (16) has on the drive side a bell housing (36), wherein the electric machine (32) is accommodated in the bell housing (36).

11. A drive system according to one of the preceding claims, **characterised in that** a vehicle electrical system (34) is provided, wherein the electric machine (32) can also be operated as a generator and in generator mode feeds electric power into the vehicle electrical system (34).

12. A method for operating a drive system (10) according to one of the preceding claims which has an electric control unit (38), wherein the method comprises the following steps:
a) in an operating state of the drive system (10), the first clutch (28) is opened and the internal combustion engine (12) is switched off or is already in a switched-off state;
c) by way of the closed second clutch (30), the centrifugal-mass drive unit (24) by means of the electric machine (32) is started up at least to a centrifugal-mass starting speed or at least held at this centrifugal-mass starting speed,
d) a signal for active vehicle acceleration is transmitted to the electric control unit (38), as a result of which starting of the internal combustion engine becomes necessary;
e) thereupon, the second clutch (30) is opened by the electric control unit (38);
f) then the first clutch (28) is closed, so that the internal combustion engine is brought up to an internal combustion engine starting speed by way of angular momentum equalisation between the centrifugal-mass drive unit (24) and the internal combustion engine shaft (14);
g) the internal combustion engine, starting from the internal combustion engine starting speed, is operated in fired operating mode and revved up to a target internal combustion engine speed.

13. A method for operating a drive system (10) according to Claim 12, wherein once the internal combustion engine starting speed has been reached, especially once the target internal combustion engine speed has been reached, the second clutch (30) is closed and the transmission clutch (22) is in a closed state or is closed, so that a power transmission or flow of force between the internal combustion engine shaft (14) and the driveable wheels of the hybrid vehicle is produced.

14. A method for operating a drive system (10) according to one of Claims 12 or 13, wherein in a first method step b) which is carried out directly after method step a) and prior to method step c), the electric machine (32) when the transmission clutch (22) is completely closed or partially closed is non-positively connected to the driveable wheels of the hybrid vehicle, in order thus to provide a positive or negative torque to the driveable wheels of the hybrid vehicle.

15. A method for operating a drive system (10) according to Claim 14,
**characterised in that**
when the internal combustion engine is switched off and the vehicle is at a standstill or at crawling speed, the transmission clutch (22) prior to step b) is brought into slipping operating mode, so that the electric machine (32) is non-positively connected to the driveable wheels of the hybrid vehicle, in order thus to provide a positive or negative torque to the driveable wheels of the hybrid vehicle, simultaneously the second clutch (30) is in a closed state or is closed, so that the electric machine (32) and the centrifugal-mass drive unit (24) are in a rotation-resistant flow of force with each other, and the electric machine is operated at centrifugal-mass starting speed or above, wherein the centrifugal-mass starting speed is higher than the speed of the electric machine yielded from the current vehicle speed over the wheel speed in the case of a completely closed transmission clutch (22).

16. A method for operating a drive system (10) according to one of Claims 12 to 15, **characterised in that**
the centrifugal-mass starting speed lies in a range between 1000 rpm and 1400 rpm.

17. A method for operating a drive system (10) according to one of Claims 12 to 16, **characterised in that**
the centrifugal-mass starting speed once the vehicle has been initialised is adjusted by way of the electric machine (32) while the vehicle is still at a standstill.

18. A method for operating a drive system (10) according to one of Claims 12 to 16, **characterised in that**
from out of the vehicle standstill, the centrifugal-mass starting speed is adjusted simultaneously with the first provision of a positive torque of the electric machine (32) to the driveable wheels of the hybrid vehicle.

## Revendications

1. Système d'entraînement destiné à un véhicule hybride équipé d'un moteur à combustion interne (12) comportant un arbre (14) qui est réalisé pour permettre de délivrer une puissance d'entraînement en direction de roues motrices du véhicule hybride,
une boîte de vitesses (16) qui comporte, côté entraînement, un arbre d'entrée (18) et côté entraîné un arbre de sortie (20), et équipée d'un embrayage (22) permettant de coupler ou de découpler l'arbre d'entrée (18) de la boîte de vitesses et l'arbre de sortie (20) de la boîte de vitesses, et d'une unité d'entraînement à masses d'inertie (24), qui est installée par rapport à la transmission de la puissance d'entraînement entre l'arbre du moteur à combustion interne (14) et l'arbre d'entrée de la boîte de vitesses (18), ainsi qu'un arbre intermédiaire (26) et un premier embrayage (28) permettant de coupler ou de découpler l'arbre du moteur à combustion interne (14) et l'arbre intermédiaire (26) et un second embrayage (30) permettant de coupler ou de découpler l'arbre intermédiaire (26) et l'arbre d'entrée de la boîte de vitesses (18) ainsi que d'une machine électrique (32) qui est reliée de façon à transmettre les couples de rotation à l'arbre d'entrée (18) de la boîte de vitesses, et par l'intermédiaire de laquelle l'arbre d'entrée (18) de la boîte de vitesses peut être entraîné selon un mode d'entraînement moteur, l'unité d'entraînement à masses d'inertie comportant un dispositif permettant de réduire les oscillations de rotation avec un arbre d'entrée de transmission situé côté entraînement (56) et un arbre de sortie de transmission (58) situé côté entraîné, et le dispositif permettant de réduire les oscillations de rotation (54) étant réalisé pour permettre de diminuer des oscillations de rotation de l'arbre intermédiaire (26),
**caractérisé en ce que**
le dispositif permettant de réduire les oscillations (54) est installé en totalité entre le premier embrayage (28) et le second embrayage (30) par rapport à la transmission de la puissance d'entraînement.

2. Système d'entraînement destiné à un véhicule hybride conforme à la revendication 1,
**caractérisé en ce que**
le dispositif permettant de réduire les oscillations de rotation comporte un côté primaire tourné vers le moteur à combustion interne et un côté secondaire tourné vers la boîte de vitesses du véhicule.

3. Système d'entraînement destiné à un véhicule hybride conforme à l'une des revendications précédentes,
**caractérisé en ce que**
l'arbre d'entrée de transmission est mobile en rotation par rapport à l'arbre de sortie de transmission pour permettre de réduire les oscillations de rotation, et
l'arbre d'entrée de transmission et l'arbre de sortie de transmission sont concentriques et concentriques à l'arbre du moteur à combustion interne.

4. Système d'entraînement conforme à l'une des revendications précédentes,
**caractérisé en ce que**
le dispositif permettant de réduire les oscillations de rotation est réalisé sous la forme d'un amortisseur adaptable à la vitesse de rotation.

5. Système d'entraînement conforme à la revendication 4,
**caractérisé en ce que**
l'amortisseur adaptable à la vitesse de rotation comporte ou est réalisé sous la forme d'un pendule à force centrifuge pour permettre une adaptation à la vitesse de rotation.

6. Système d'entraînement destiné à un véhicule hybride conforme à l'une des revendications précédentes,
**caractérisé en ce que**
le dispositif permettant de réduire les oscillations de rotation est réalisé sous la forme d'un amortisseur semi-actif ou actif.

7. Système d'entraînement conforme à l'une des revendications précédentes,
**caractérisé en ce que**
la machine électrique (32) est une machine électrique basse tension ayant une tension de fonctionnement inférieure à 60 V.

8. Système d'entraînement conforme à l'une des revendications précédentes,
**caractérisé en ce que**
la machine électrique (32) est intégrée dans la boîte de vitesses (16) du véhicule.

9. Système d'entraînement conforme à l'une des revendications précédentes,
**caractérisé en ce que**
la boîte de vitesses (16) du véhicule est réalisée sous la forme d'une boîte de vitesses automatique ou d'une boîte de vitesses de véhicule pouvant être branchée de façon automatisée.

10. Système d'entraînement conforme à l'une des revendications précédentes,
**caractérisé en ce que**
la boîte de vitesses (16) du véhicule comporte, côté entraînement, une cloche d'embrayage (36), la machine électrique (32) étant logée dans cette cloche d'embrayage (36).

11. Système d'entraînement conforme à l'une des revendications précédentes,
**caractérisé en ce qu'**
il est prévu un réseau électrique embarqué (34), la machine électrique (32) pouvant également fonctionner en tant que générateur et fournissant, de l'énergie électrique au réseau électrique embarqué (34), en mode de fonctionnement en tant que générateur.

12. Procédé de gestion d'un système d'entraînement (10) conforme à l'une des revendications précédentes,
comportant une unité de commande électrique (38), ce procédé comprenant les étapes suivantes :
a) dans un état de fonctionnement du système d'entraînement (10) le premier embrayage (28) est ouvert et le moteur à combustion interne (12) est fermé, ou se trouve déjà à l'état coupé,
c) par l'intermédiaire du second embrayage (30), coupé, l'unité d'entraînement à masse d'inertie (24) est démarrée au moyen de la machine électrique (32) au moins à une vitesse de rotation de départ des masses d'inertie ou maintenue au moins à cette vitesse de rotation de départ des masses d'inertie,
d) un signal d'accélération active du véhicule, est transmis à l'unité de commande électrique (38), un démarrage du moteur à combustion interne étant ainsi nécessaire,
e) le second embrayage (30) est alors ouvert par l'unité de commande électrique (38),
f) le premier embrayage (28) est ensuite fermé de sorte que, par un équilibrage des impulsions de rotation entre l'unité d'entraînement à masses d'inertie (24) et l'arbre du moteur à combustion interne (14), ce moteur à combustion interne soit entraîné à une vitesse de rotation de démarrage,
g) à partir de sa vitesse de rotation de démarrage, le moteur à combustion interne est actionné en fonctionnement moteur et est accéléré à une vitesse de rotation cible.

13. Procédé de gestion d'un système d'entraînement (10) conforme à la revendication 12,
selon lequel, après l'atteinte de la vitesse de rotation de démarrage du moteur à combustion interne, en particulier de la vitesse de rotation cible du moteur à combustion interne le second embrayage (30) est fermé et l'embrayage (22) de la boîte de vitesses est fermé ou devient fermé de façon à obtenir une transmission de puissance ou un flux de force entre l'arbre (14) du moteur à combustion interne (14) et les roues motrices du véhicule hybride.

14. Procédé de gestion d'un système d'entraînement (10) conforme à l'une des revendications 12 et 13,
selon lequel lors d'une étape b) qui est mise en œuvre immédiatement après l'étape a) et avant l'étape c), la machine électrique (32) se trouve, l'embrayage de la boîte de vitesses (22) étant totalement fermé ou partiellement fermé en liaison de force avec les roues motrices du véhicule hybride pour fournir ainsi un couple de rotation positif ou négatif à ces roues motrices.

15. Procédé de gestion d'un système d'entraînement (10) conforme à la revendication 14,
**caractérisé en ce que**
lorsque le moteur à combustion interne est coupé et que le véhicule se trouve au repos ou au ralenti, l'embrayage de la boîte de vitesses (22) est, avant l'étape b), transféré en fonctionnement de poussée de sorte que la machine électrique (32) se trouve en liaison de force avec les roues motrices du véhicule hybride pour régler ainsi un couple positif ou négatif sur les roues motrices du véhicule hybride, simultanément le second embrayage (30) ou devient fermé de sorte que la machine électrique (32) et l'unité d'entraînement à masses d'inertie (24) se trouvent l'une par rapport à l'autre en liaison de force solidairement en rotation et la machine électrique est actionnée à la vitesse de rotation de démarrage des masses d'inertie ou au-dessus, la vitesse de rotation de démarrage des masses d'inertie étant supérieure à la vitesse de rotation de la machine électrique s'établissant à partir de la vitesse actuelle du véhicule par l'intermédiaire de la vitesse de rotation des roues lorsque l'embrayage de la boîte de vitesses (22) est totalement fermé.

16. Procédé de gestion d'un système d'entraînement (10) conforme à l'une des revendications 12 à 15,
**caractérisé en ce que**
la vitesse de rotation de démarrage des masses d'inertie est située dans une plage comprise entre 1000 U/minute et 1400 U/minute.

17. Procédé de gestion d'un système d'entraînement (10) conforme à l'une des revendications 12 à 16,
**caractérisé en ce que**
la vitesse de rotation de démarrage des masses d'inertie est déjà réglée après une initialisation du véhicule à l'état d'arrêt du véhicule par l'intermédiaire de la machine électrique (32).

18. Procédé de gestion d'un système d'entraînement (10) conforme à l'une des revendications 12 à 16,
**caractérisé en ce qu'**
à partir de l'état d'arrêt du véhicule la vitesse de rotation de démarrage des masses d'inertie est réglée, en même temps qu'un premier réglage d'un couple positif de la machine électrique (32) sur les roues motrices du véhicule hybride.
